# EUROPEAN PATENT SPECIFICATION

(11) **EP 3 742 023 B1**
(45) Date of publication and mention of the grant of the patent: **30.03.2022**
(21) Application number: 20175427.2
(22) Date of filing: 19.05.2020
(51) Int. Cl.: F16H 47/04

(54) **TRANSMISSION APPARATUS FOR WORK VEHICLE AND HST UNIT**
GETRIEBEVORRICHTUNG FÜR ARBEITSFAHRZEUG UND HST-EINHEIT
APPAREIL DE TRANSMISSION POUR VÉHICULE DE TRAVAIL ET UNITÉ HST

(30) Priority: 21.05.2019 JP 2019094918
(43) Date of publication of application: 25.11.2020
(73) Proprietor: Kanzaki Kokyukoki Mfg. Co., Ltd., Hyogo 661-0981 (JP)
(72) Inventor: OWADA, Kazuhiro, Hyogo, 661-0981 (JP); IWAKI, Koji, Hyogo, 661-0981 (JP)
(74) Representative: Isarpatent

(56) References cited:
- US-A1- 2004 244 514
- US-A1- 2012 046 138

## Description

### BACKGROUND OF THE INVENTION

### Field of the Invention

The present invention relates to a transmission apparatus for a work vehicle including a hydro-static transmission (HST), and relates also to an HST unit.

### Background Art

A transmission apparatus including an HST capable of continuously variably changing a speed is suitably used for a work vehicle such as a combine or a tractor.

For example, Japanese Unexamined Patent Application Publication No. 2008-111529 (hereinafter, referred to as Patent document 1) discloses a transmission apparatus including: an HST provided with an HST input shaft to which a rotation power is operatively input from a drive source, a pump main body supported on the HST input shaft, a motor main body hydraulically driven by the pump main body, and an HST output shaft configured to support the motor main body, and an HST case configured to support the HST input shaft and the HST output shaft and to house the pump main body and the motor main body; a multistage transmission mechanism configured to change a speed of an HST output operatively input from the HST output shaft; a PTO transmission shaft operatively coupled to the HST input shaft; and a PTO output shaft configured to output a rotation power operatively input from the PTO transmission shaft to outside.

In the transmission apparatus, a transmission structure from the HST output shaft to a traveling driving unit such as a driving wheel via the multistage transmission mechanism forms a traveling transmission path, and a transmission structure from the HST input shaft to the PTO output shaft via the PTO transmission shaft forms a PTO transmission path.

The transmission apparatus described in Patent document 1 is further provided with an acceleration gear unit interposed between the drive source and the HST input shaft and configured to accelerate the rotation power from the drive source and transmit the accelerated rotation power to the HST input shaft.

The acceleration gear unit includes a transmission input shaft to which a rotation power is operatively input from the drive source, an acceleration gear train configured to accelerate the rotation power of the transmission input shaft, an acceleration output shaft configured to output the rotation power accelerated by the acceleration gear train, and a gear case configured to support the transmission input shaft and the acceleration output shaft and to house the acceleration gear train.

If it is assumed that Ra1 denotes an HST input rotation speed in a configuration where the rotation power is input from the drive source to the HST input shaft not passing through the acceleration gear train (hereinafter, referred to as "normal input configuration") and Ra2 (>Ra1) denotes an HST input rotation speed in a configuration where the rotation power is input from the drive source to the HST input shaft via the acceleration gear train (hereinafter, referred to as "acceleration input configuration"), a maximum rotation speed of the HST output that can be output from the HST output shaft is Rb1 in the normal input configuration and Rb2 (>Rb1) in the acceleration input configuration.

Here, it is assumed that a highest traveling speed required for the work vehicle is Vx and a rotation speed of the HST output required for achieving Vx is Rb1.

In this case, to obtain the maximum traveling speed of the work vehicle in the normal input configuration, it is necessary that a movable swash plate of the HST is swung to a maximum tilt position to accelerate the HST output to the maximum rotation speed Rb1 in the normal input configuration.

On the other hand, in the acceleration input configuration, the movable swash plate of the HST does not need to swing to the maximum tilt position, but may only swing to a predetermined tilt position between a neutral position and the maximum tilt position to accelerate the rotation speed of the HST output to Rb1 (<Rb2). That is, in the acceleration input configuration, as compared with the normal input configuration, it is possible to achieve a predetermined traveling speed (for example, Vx) even if a reduction ratio from the HST to a traveling driving unit is set to be large, it is possible to realize a torque-up of an axle while maintaining a maximum vehicle speed.

The transmission apparatus, disclosed in Patent document 1, including the acceleration gear train is useful in that a torque-up effect of the axle can be obtained, but has the following disadvantages.

That is, the maximum traveling speed required for the work vehicle fluctuates according to specifications or demands.

For example, the required maximum traveling speed may be Vx, or the required maximum traveling speed may be Vy lower than Vx.

In the configuration described in Patent document 1, if the acceleration gear unit is mounted, the work vehicle with the maximum traveling speed Vx may be acceptable, and at the same time, if the acceleration gear unit is removed, it is possible to prevent an excessive specification for the work vehicle with the maximum traveling speed Vy. On the other hand, the rotation speed of the PTO rotation power output from the PTO output shaft changes between a state where the acceleration gear unit is mounted and a state where the same is not mounted.

That is, in the configuration described in Patent document 1, if the acceleration gear unit is removed, the rotation speed of the HST input shaft decreases as compared with the state where the acceleration gear unit is mounted, and in this case, in response thereto, the rotation speed of the PTO output shaft also decreases.

The rotation power of the PTO output shaft is typically used as a driving force for a working machine mounted to the work vehicle or an external working machine, and thus, irrespective of the specification regarding the maximum traveling speed of the work vehicle, the rotation power is desirably constant.

In the transmission apparatus described in Patent document 1, the transmission input shaft and the acceleration output shaft are arranged coaxially (on a first axis line), and when the gear case is coupled to the HST case, the HST input shaft is coupled coaxially to the acceleration output shaft so as to be relatively non-rotatable around the axis thereto.

The HST output shaft forming the traveling transmission path is arranged on a second axis line displaced from the first axis line.

On the other hand, the PTO transmission path includes the HST input shaft, a PTO relay shaft coaxially (that is, on the first axis line) coupled to the HST input shaft to be relatively non-rotatable around the axis thereto, and a PTO transmission shaft operatively coupled to the PTO relay shaft via a gear train while being arranged on a third axis line displaced from both the PTO relay shaft and the HST output shaft.

The transmission apparatus having such a configuration described in Patent document 1 has a problem in that the shafts forming the traveling transmission path and the shaft forming the PTO transmission path cannot be compactly arranged in a radial direction orthogonal to these shafts, and as a result, a transmission case configured to house these shafts increases in size in the radial direction.

Published patent document US 2004/244514 A (hereinafter, referred to as Patent do cument 2) provides a transmission for a work vehicle having PTO function is disclosed. The transmission includes a first transmission shaft for receiving engine power throu gh a PTO power train, a Second transmission shaft for receiving, the engine power th rough a traveling power train, the Second transmission shaft being coupled to a rear differential mechanism, a third transmission shaft coupled to a rear PTO, a fourth tr ansmission Shaft for receiving force from the Second transmission shaft, a first gear t ransmission mechanism for transmitting the force from the first transmission shaft to, the third transmission shaft.

### SUMMARY OF THE INVENTION

The present disclosure has been made in view of the conventional technology, and an object thereof is to provide a transmission apparatus for a work vehicle capable of obtaining a torque-up effect of an axle configured to operatively drive a traveling driving unit by accelerating a rotation power input from a drive source to an HST input shaft by using an acceleration gear train, in particular, a transmission apparatus for a work vehicle capable of easily changing in specification between a configuration with the acceleration gear train and a configuration without the acceleration gear train while preventing the apparatus from increasing in size and from causing a change in a rotation speed of a PTO shaft.

In order to achieve the object, the present invention provides a transmission apparatus for work vehicle, including: a transmission input shaft to which a rotation power is operatively input from a drive source; an HST including an HST input shaft, a pump main body supported on the HST input shaft, a motor main body hydraulically driven by the pump main body, and an HST output shaft configured to support the motor main body, the HST being configured to output a traveling rotation power from the HST output shaft toward a traveling driving unit; a PTO output shaft from which a rotation power is output to outside; and a PTO transmission shaft forming at least a part of a PTO transmission path from the HST input shaft to the PTO output shaft); the transmission apparatus for work vehicle being characterized in that, the HST input shaft is displaced from an axis of the transmission input shaft, and the HST output shaft is displaced from both axes of the transmission input shaft and the HST input shaft, the PTO transmission shaft is arranged coaxially with the transmission input shaft on a downstream side of the HST in a power transmission direction, the transmission apparatus for work vehicle further includes an acceleration gear train configured to accelerate a rotation power of the transmission input shaft, and a deceleration gear train configured to decelerate a rotation power input operatively from a second end of the HST input shaft on a downstream side in the power transmission direction, the HST input shaft operatively receives, at a first end on one side in an axial direction, the rotation power from the drive source that is accelerated by the acceleration gear train, and the PTO transmission shaft operatively receives the rotation power form a second end of the HST input shaft that is decelerated by the deceleration gear train. The acceleration gear train (130) and the deceleration gear train (330) is set to have such transmission ratios as that the rotation speeds of the transmission input shaft (120) and the PTO transmission shaft (310) are the same.

The transmission apparatus for work vehicle according to the present invention can obtain a torque-up effect of the axle that operatively drives the traveling driving unit since the acceleration gear train accelerates the rotation power that is transmitted from the drive source to the HST input shaft, and also can easily perform a specification change between a configuration with the acceleration gear train and a configuration without the acceleration gear train while preventing the transmission apparatus from increasing in size and preventing the rotational speed of the PTO shaft from changing.

The transmission apparatus according to an embodiment of the present disclosure includes a planetary gear mechanism, and a PTO relay shaft arranged coaxially with the HST input shaft and coupled to the second end of the HST input shaft so as to be relatively non-rotatable thereto around the axis.

The transmission input shaft is arranged so as to have an axis line that is positioned, in a case where it is viewed in an axial direction, between the axis lines of the HST input shaft and the HST output shaft, and is also positioned, in a case where a plane passing through the axis lines of the HST input shaft and the HST output shaft is referred to as a virtual HST reference plane, on one side of the virtual HST reference plane in a width direction orthogonal to the virtual HST reference plane.

The planetary gear mechanism includes a sun gear operatively receiving an HST output from the HST output shaft and positioned on an axis line that is arranged on an opposite side of the transmission input shaft from the virtual HST reference plane in the width direction so that the axis line of the transmission input shaft being interposed therebetween, an internal gear operatively receiving a drive source output from the PTO relay shaft, and a planetary carrier outputting a combined rotation power of the HST output and the drive source output.

The deceleration gear train is inserted between the PTO transmission shaft and a portion of the PTO relay shaft that is positioned on a downstream side of the planetary gear mechanism in the power transmission direction.

The transmission apparatus according to the embodiment may preferably include a traveling transmission shaft having an axis line arranged on an opposite side of the axis line of the transmission input shaft from the axis line of the planetary gear mechanism in the width direction so that the axis line of the transmission input shaft being interposed therebetween, and a forward/reverse movement switching mechanism configured to operatively transmit a rotation power of the planetary carrier to the traveling transmission shaft in a manner to switch between forward and reverse movements.

The forward/reverse movement switching mechanism includes a first traveling transmission mechanism, a second traveling transmission mechanism and a clutch mechanism. The first traveling transmission mechanism includes a first traveling driving gear operatively coupled to the planetary carrier and a first traveling driven gear inserted around the traveling transmission shaft so as to be relatively rotatable thereto and being meshed with the first traveling driving gear. The first traveling transmission mechanism operatively transmits, as a rotation power in one direction of the forward and rear directions, the rotation power of the planetary carrier to the first traveling driven gear. The second traveling transmission mechanism includes a second traveling driving gear operatively coupled to the planetary carrier and a second traveling driven gear inserted around the traveling transmission shaft so as to be relatively rotatable thereto. The second traveling transmission mechanism is configured to operatively transmit, as a rotation power in the other direction of the forward and rear directions, the rotation power of the planetary carrier to the second traveling driven gear. The clutch mechanism is configured to selectively engage the first and second traveling driven gears with the traveling transmission shaft.

The second traveling transmission mechanism further includes a traveling relay shaft inserted around the PTO relay shaft so as to be relatively rotatable thereto, a first intermediate gear supported on the traveling relay shaft so as to be relatively non-rotatable thereto and meshed with the second traveling driving gear, and a second intermediate gear supported on the traveling relay shaft so as to be relatively non-rotatable thereto and meshed with the second traveling driven gear via an idle gear.

The transmission apparatus according to an embodiment may include a traveling output shaft arranged parallel to the traveling transmission shaft; and a multistage transmission mechanism configured to shift, in multiple stages, a rotation power between the traveling transmission shaft and the traveling output shaft.

In a preferable embodiment, the traveling transmission shaft is arranged on the opposite side of the virtual HST reference plane from the transmission input shaft in the width direction, and the traveling output shaft is arranged between the virtual HST reference plane and the axis line of the planetary gear mechanism with respect to the width direction.

The transmission apparatus according to an embodiment may include an acceleration output shaft outputting a rotation power accelerated by the acceleration gear train; a gear case configured to support the transmission input shaft and the acceleration output shaft and to house the acceleration gear train; an HST case configured to support the HST input shaft and the HST output shaft and to house the pump main body and the motor main body ; and a transmission case configured to support the PTO relay shaft and the PTO transmission shaft and to house the planetary gear mechanism and the deceleration gear train. In the transmission apparatus, wherein the acceleration output shaft and the HST input shaft are configured to be coupled to each other so as to be relatively non-rotatable around the axis to each other by connecting the gear case to the HST case.

In this configuration, the transmission case is preferably configured to support the PTO transmission shaft on a first axis line and to support the planetary gear mechanism on a second axis line.

The HST case is configured to be detachably connected to the transmission case in first and second postures. The first posture of the HST case relative to the transmission case causes the HST input shaft to be positioned on a third axis line while causing the HST output shaft to be positioned on a fourth axis line. The second posture of the HST case relative to the transmission case causes the HST output shaft to be positioned on a fifth axis line while causing the HST input shaft to be positioned on the third axis line.

The gear case is detachably connected to the HST case in first and second postures in a case where the HST case is coupled to the transmission case in the first and second postures, respectively. The first posture of the gear case relative to the HST case causes the transmission input shaft to be positioned on the first axis line while causing the acceleration output shaft to be positioned on the third axis line. The second posture of the gear case relative to the HST case causes the transmission input shaft to be positioned on the first axis line while causing the acceleration output shaft to be positioned on the third axis line.

In a more preferable embodiment, the HST case is also detachably connected to the transmission case in a third posture in addition to the first and second postures. The third posture of the HST case relative to the transmission case causes the HST input shaft to be positioned on the first axis line.

The transmission apparatus according to a second aspect of the present invention includes a multistage transmission mechanism inserted between the HST and the traveling driving unit in a traveling transmission path. The multistage transmission mechanism shifts, in multiple stages, a rotation power operatively input from the HST output shaft and outputs the resultant rotation power toward the traveling driving unit.

### BRIEF DESCRIPTION OF THE DRAWINGS

FIG. 1 is a schematic diagram of a power transmitting structure of a work vehicle to which a transmission apparatus according to one embodiment of the present embodiment is applied.
FIG. 2 is a perspective view of a main portion of the transmission apparatus.
FIG. 3 is a cross-sectional view taken along the line III-III in FIG. 1.
FIG. 4 is a cross-sectional view taken along the line IV-IV in FIG. 1.
FIG. 5 is a cross-sectional view taken along the line V-V in FIG. 1.
FIG. 6 is a cross-sectional view taken along the line VI-VI in FIG. 1.
FIG. 7 is an exploded perspective view of an acceleration gear unit and an HST of the transmission apparatus.
FIG. 8 is a schematic diagram of a power transmitting structure of a work vehicle to which a transmission apparatus according to a first modification of the embodiment.
FIG. 9 is a cross-sectional view taken along the line IX-IX in FIG. 8.
FIG. 10 is a cross-sectional view taken along the line X-X in FIG. 8.
FIG. 11 is a schematic diagram of a power transmitting structure of a work vehicle to which a transmission apparatus according to a second modification in which the acceleration gear train and a deceleration gear train are omitted in comparison with the transmission apparatus according to the embodiment is applied.
FIG. 12 is a cross-sectional view taken along the line XII-XII in FIG. 11.
FIG. 13 is a cross-sectional view taken along the line XIII-XIII in FIG. 11.
FIG. 14 is a cross-sectional view of a part of a modification of an HST unit in the embodiment.

### DETAILED DESCRIPTION OF THE PREFERRED EMBODIMENTS

An embodiment of a transmission apparatus according to the present invention will be described below with reference to the accompanying drawings.

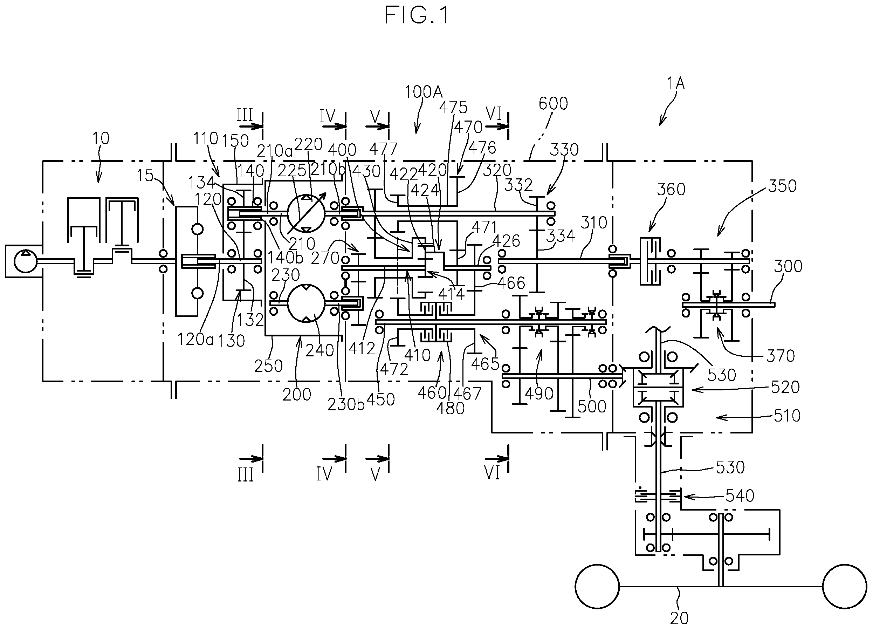

FIG. 1 is a schematic diagram illustrating a power transmitting structure of a work vehicle 1A including a transmission apparatus 100A according to the present disclosure.

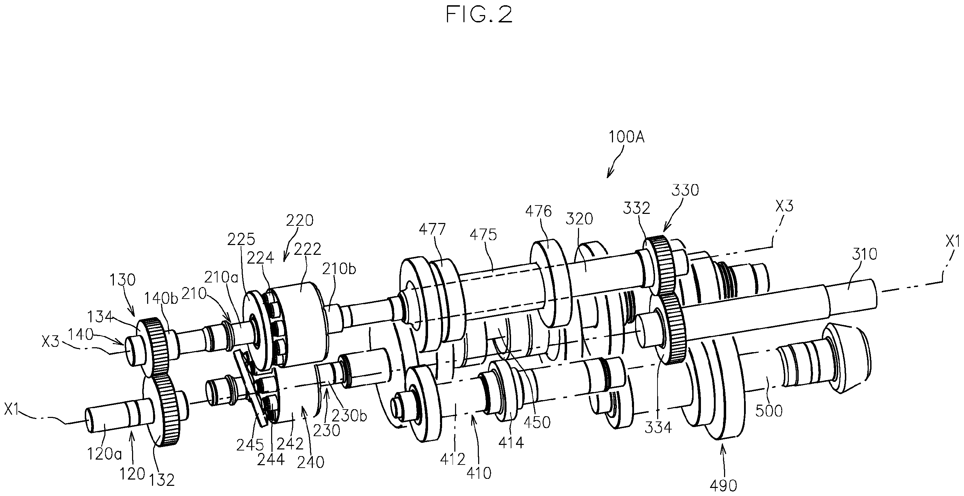

FIG. 2 illustrates a perspective view of a main portion of the transmission apparatus 100A.

The transmission apparatus 100A is configured to output, as traveling driving force, rotation power from a drive source 10 provided in the work vehicle 1A toward a traveling driving unit (a rear wheel 20 in the illustrated work vehicle 1A), and output, as a work driving force, to outside via a PTO shaft 300.

Specifically, as illustrated in FIG. 1 and FIG. 2, the transmission apparatus 100A includes a transmission input shaft 120 to which rotation power is operatively input from the drive source 10, an HST 200 to which rotation power is operatively input from the transmission input shaft 120, the PTO output shaft 300, a PTO transmission shaft 310 forming at least a part of a PTO transmission path extending from the drive source 10 to the PTO output shaft 300, and a transmission case 600 configured to support the PTO output shaft 300 and the PTO transmission shaft 310, the transmission case 600 being coupled with the HST 200.

The HST 200 includes an HST input shaft 210 to which rotation power is operatively input from the transmission input shaft 120, a pump main body 220 supported on the HST input shaft 210, a motor main body 240 hydraulically driven by the pump main body 220, and an HST output shaft 230 configured to support the motor main body 240.

At least one of the pump main body 220 and the motor main body 240 is a variable volume body having a changeable capacity so that according to a volume change of the variable volume body, a rotation speed of the HST output shaft 230 with respect to a rotation speed of the HST input shaft 210 is changed continuously.

In the present embodiment, the pump main body 220 is a variable volume body.

That is, as illustrated in FIG. 1 and FIG. 2, the pump main body 220 includes a pump-side cylinder block 222 supported on the HST input shaft 210 so as to be relatively non-rotatable thereto around the axis, and a pump-side piston 224 housed in the pump-side cylinder block 222 in such a manner that the pump-side piston 224 does not relatively rotate thereto around the axis while being capable of advancing and retreating relative thereto in the axis direction.

The HST 200 further includes a pump-side swash plate 225 defining a range where the pump-side piston 224 advances and retreats, and the pump-side swash plate 225 is a movable swash plate capable of swinging around a swing axis.

In the present embodiment, the motor main body 240 is a fixed volume body.

That is, as illustrated in FIG. 1 and FIG. 2, the motor main body 240 includes a motor-side cylinder block 242 supported on the HST output shaft 230 so as to be relatively non-rotatable thereto around the axis, and a motor-side piston 244 housed in the motor-side cylinder block 242 in such a manner that the motor-side piston 244 does not relatively rotate thereto around the axis while being capable of advancing and retreating relative thereto in the axis direction.

The HST 200 further includes a motor-side swash plate 245 defining a range where the motor-side piston 244 advances and retreats, and the motor-side swash plate 245 is a fixed swash plate.

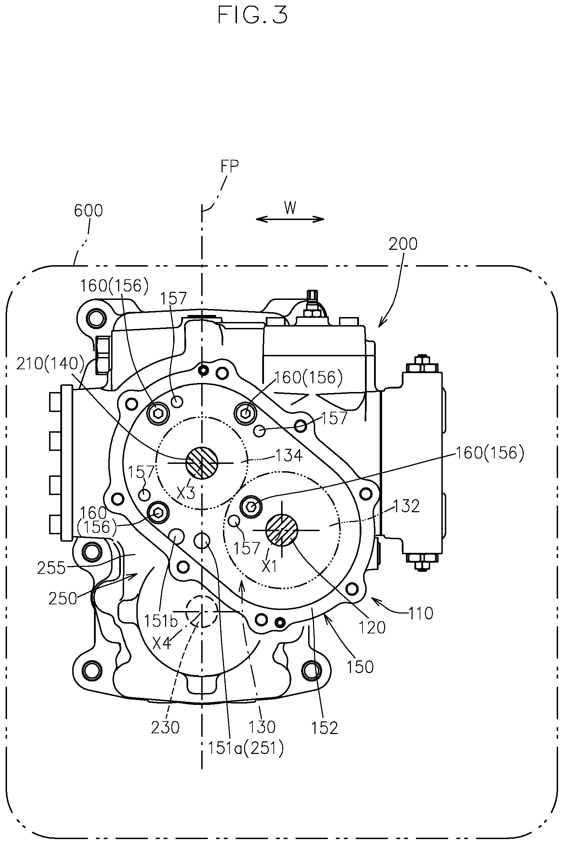

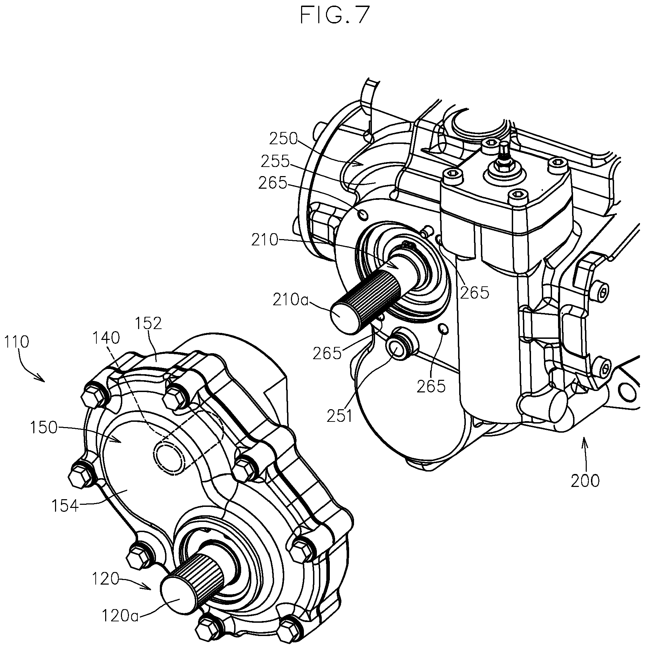

In the present embodiment, the HST 200 further includes an HST case 250 configured to support the HST input shaft 210 and the HST output shaft 230 so as to be rotatable around the respective axes and to house the pump main body 220 and the motor main body 240 (see FIG. 1, and see FIG. 3 and FIG. 7 described below).

As illustrated in FIG. 1, the HST input shaft 210 is supported on the HST case 250 so that a first end 210a on one side in the axial direction is accessible from the one side in the axial direction, and a second end 210b on the other side in the axial direction is accessible from the other side in the axial direction.

The HST output shaft 230 is supported on the HST case 250 so that a second end 230b on the other side in the axial direction is accessible from the other side in the axial direction.

It is noted that the HST case 250 includes a port block to which the pump-side cylinder block 222 and the motor-side cylinder block 242 are slidably contacted around the respective axes, and the port block (not illustrated) formed with a pair of hydraulic oil passages for fluidly connecting the two blocks 222 and 242, and an HST case main body 255 (see FIG. 3 and FIG. 7 below) detachably coupled to the port block to form an HST space for housing the pump main body 220 and the motor main body 240.

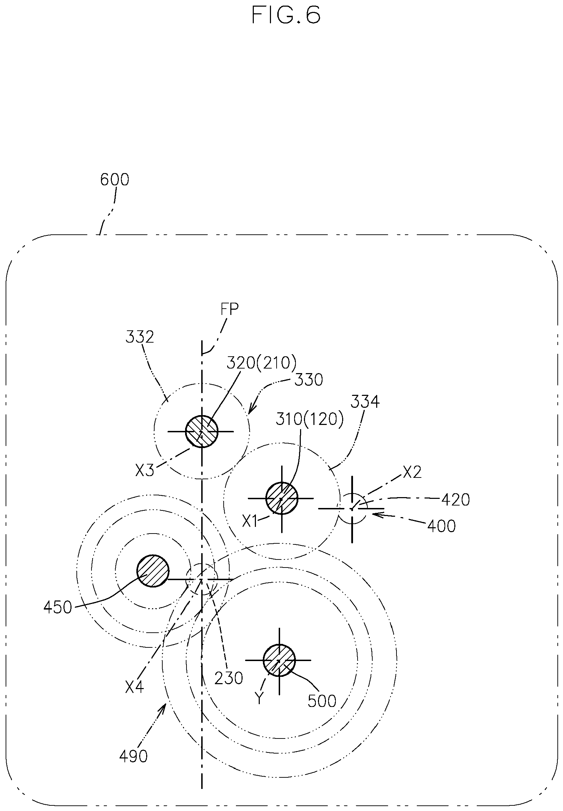

FIG. 3 to FIG. 6 are cross-sectional views taken along the lines III-III, IV-IV, V-V, and VI-VI in FIG. 1, respectively.

As illustrated in FIG. 1 to FIG. 3, the HST input shaft 210 is provided to be displaced from an axis of the transmission input shaft 120, and the HST output shaft 230 is provided to be displaced from both axes of the transmission input shaft 120 and the HST input shaft 210.

In the present embodiment, the first end 210a of the HST input shaft 210 is operatively coupled to the transmission input shaft 120 via an acceleration gear train 130.

More specifically, as illustrated in FIG. 1 to FIG. 3, the transmission apparatus 100A includes the acceleration gear train 130 configured to accelerate the rotation power of the transmission input shaft 120, and the rotation power from the drive source 10 is transmitted to the HST input shaft 210 with the rotation power being accelerated by the acceleration gear train 130.

With such a configuration, it is possible to raise a maximum rotation speed of the HST output which is output from the HST output shaft 230 without raising the output rotation speed of the drive source 10, and as a result, it is possible to obtain a torque-up effect of an axle configured to operatively drive the traveling driving unit.

That is, it is assumed that Ra1 denotes the rotation speed (HST input rotation speed) of the HST input shaft 210 in a configuration (hereinafter, referred to as "normal configuration") where the rotation power from the drive source 10 is operatively input to the HST input shaft 210 without passing through the acceleration gear train 130.

A maximum speed (HST output maximum rotation speed) of the rotation power possibly output from the HST output shaft 230 with respect to the HST input rotation speed is defined by a maximum gear ratio S of the HST 200.

Here, Rb1 (= Ra1 × S) represents the HST output maximum rotation speed if the HST input rotation speed is Ra1.

On the other hand, if the HST input rotation speed, in the present embodiment (that is, an acceleration input configuration where the rotation power from the drive source 10 is operatively input to the HST input shaft 210 via the acceleration gear train 130), is represented by Ra2 (>Ra1), the HST output maximum rotation speed in the present embodiment is Rb2 (= Ra2 × S > Rb1).

Here, the maximum traveling speed Vx required for the work vehicle 1A is determined according to a particular specification, and if it is assumed that Ra1 denotes the rotation speed of the HST output required to reach the maximum traveling speed Vx, it is necessary that the movable swash plate (in the present embodiment, the pump-side swash plate 225) of the HST 200 is swung to the maximum tilt position and the HST output is raised to the maximum rotation speed Rb1 in the normal input configuration to obtain the maximum traveling speed Vx of the work vehicle 1A in the normal input configuration.

On the other hand, in the present embodiment where the rotation power from the drive source 10 is accelerated by the acceleration gear train 130, and then is operatively input to the HST input shaft 210, it may suffice that the movable swash plate (the pump-side swash plate 225 in the present embodiment) of the HST 200 is swung to a predetermined tilt position between the maximum tilt position and a neutral position to raise the rotation speed of the HST output to Rb1 (<Rb2).

That is, in the present embodiment, compared to the normal input configuration, it is possible to obtain the maximum traveling speed Vx of the work vehicle 1A even if a reduction ratio from the HST 200 to the traveling driving unit is set to be large, and it is possible to obtain a torque-up effect of an axle configured to operatively drive the traveling driving unit.

Conversely, if the reduction ratios from the HST 200 to the traveling driving unit are set to be the same in the present embodiment and the normal input configuration, in the present embodiment, as compared to the normal input configuration, it is possible to raise the maximum traveling speed while maintaining an axle torque.

In the transmission apparatus 100A according to the present embodiment, the acceleration gear train 130 is a constituent component of an acceleration gear unit 110.

That is, the transmission apparatus 100A includes the acceleration gear unit 110 including the acceleration gear train 130.

FIG. 7 is an exploded perspective view of the acceleration gear unit 110 and the HST 200.

As illustrated in FIG. 1 to FIG. 3 and FIG. 7, the acceleration gear unit 110 includes the transmission input shaft 120, a gear case 150 configured to support the transmission input shaft 120 in a state where an access from outside to a first end 120a on the one side in the axial direction is possible, an acceleration output shaft 140 supported by the gear case 150 parallel to the transmission input shaft 120 in a state where an access from outside to a second end 140b on the other side in the axial direction is possible, and the acceleration gear train 130 configured to accelerate the rotation power of the transmission input shaft 120 and then transmit the resultant rotation power to the acceleration output shaft 140.

The acceleration gear train 130 includes an acceleration-side large gear 132 supported on the transmission input shaft 120 so as to be relatively non-rotatable thereto around the axis, and an acceleration-side small gear 134 supported on the acceleration output shaft 140 so as to be relatively non-rotatable thereto around the axis and meshed with the acceleration-side large gear 132.

In the present embodiment, the acceleration output shaft 140 is a cylindrical shaft into which the first end 210a of the HST input shaft 210 is inserted so as to be relatively non-rotatable thereto around the axis. By coupling the gear case 150 to the HST case 250, the HST input shaft 210 is coupled to the acceleration output shaft 140 so as to be relatively non-rotatable thereto around the axis via a coupling means such as a spline.

As illustrated in FIG. 3 and FIG. 7, the gear case 150 includes a gear case main body 152 coupled to the HST case 250 while permitting an access from outside to the second end 140b of the acceleration output shaft 140, where one side of the gear case main body 152 in the axial direction is opened, and a gear case cover 154 detachably coupled to the gear case main body 152 to close the one side in the axial direction of the gear case main body 152, where the gear case cover 154 is configured to permit an access to the first end 120a of the transmission input shaft 120.

As illustrated in FIG. 3 and FIG. 7, the gear case 150 is coupled detachably to the HST case 250 via fastening members 160 such as a bolt inserted into attachment holes 156 and 157 formed in the gear case 150 and an HST case-side attachment hole 265 formed in the HST case 250.

The attachment holes 156 and 157 will be described in detail later.

As illustrated in FIG. 1, FIG. 2, and FIG. 6, the PTO transmission shaft 310 is arranged coaxially with the transmission input shaft 120 (see FIG. 3) on a downstream side of the HST 200 in a power transmission direction, and in this state, the PTO transmission shaft 310 is operatively coupled to the second end 210b of the HST input shaft 210 via a deceleration gear train 330.

More specifically, as illustrated in FIG. 1 and FIG. 2, the transmission apparatus 100A includes the deceleration gear train 330 housed in the transmission case 600, the deceleration gear train 330 configured to decelerate the rotation power operatively input from the second end 210b of the HST input shaft 210, so that the rotation power of the HST input shaft 210, which is decelerated by the deceleration gear train 33, is operatively transmitted to the PTO output shaft 300.

That is, in the transmission apparatus 100A, the rotation power from the drive source 10 is accelerated by the acceleration gear train 130 and then operatively transmitted to the HST input shaft 210 so that a high-speed rotation power can be output from the HST output shaft 230. On the other hand, the rotation power of the HST input shaft 210 is decelerated by the deceleration gear train 330 and then operatively transmitted to the PTO transmission shaft 310.

With such a configuration, in a state where the transmission apparatus 100A is effectively prevented or reduced from being increased in size in a radial direction (in a direction orthogonal to an axis of the PTO transmission shaft 310), a high-speed rotation of the HST output shaft 230 is enabled while an unnecessary high-speed rotation of the PTO output shaft 300 is effectively prevented.

As illustrated in FIG. 1, FIG. 2, and FIG. 4 to FIG. 6, the transmission apparatus 100A according to the present embodiment further includes a PTO relay shaft 320 coaxially coupled to the second end 210b of the HST input shaft 210 so as to be relatively non-rotatable thereto around the axis, and the deceleration gear train 330 is configured to decelerate the rotation power from the PTO relay shaft 320 and then transmit the resultant rotation power to the PTO transmission shaft 310.

That is, the deceleration gear train 330 includes a deceleration-side small gear 332 supported on the PTO relay shaft 320 so as to be relatively non-rotatable thereto around the axis, and a deceleration-side large gear 334 supported on the PTO transmission shaft 310 so as to be relatively non-rotatable thereto around the axis and meshed with the deceleration-side small gear 332.

In the present embodiment, in the acceleration gear train 130 and the deceleration gear train 330, transmission ratios are set so that the rotation speeds of the transmission input shaft 120 and the PTO transmission shaft 310 are the same.

As illustrated in FIG. 1, the transmission apparatus 100A according to the present embodiment includes a traveling output shaft 500 supported on the transmission case 600 so as to operatively input the rotation power from the HST output shaft 230 and output the same toward the traveling driving unit (the rear wheel 20 in the present embodiment), and further includes a planetary gear mechanism 400 housed in the transmission case 600 in a state of being inserted in a traveling transmission path from the drive source 10 to the traveling output shaft 500 via the HST 200.

The planetary gear mechanism 400 includes a sun gear 410 to which the HST output is operatively input from the HST output shaft 230, an internal gear 430 to which a drive source output is operatively input from the PTO relay shaft 320, and a planetary carrier 420 configured to output combined rotation power of the HST output and the drive source output.

As illustrated in FIG. 1, FIG. 2 and FIG. 4, the sun gear 410 includes a sun gear shaft 412 and a sun gear main body 414 supported on the sun gear shaft 412 so as to be relatively non-rotatable thereto around the axis.

In the present embodiment, the sun gear 410 is positioned to be displaced from the HST output shaft 230, and the sun gear shaft 412 is operatively coupled to the HST output shaft 230 via a gear train 270.

As illustrated in FIG. 1, the planetary carrier 420 includes a planetary gear 422 that meshes with both the sun gear main body 414 and the internal gear 430, a carrier pin 424 configured to rotatably support the planetary gear 422, the carrier pin 424 axially revolving, together with the planetary gear 422, around the sun gear 410, and a carrier shaft 426 that rotates axially according to the revolution of the carrier pin 424.

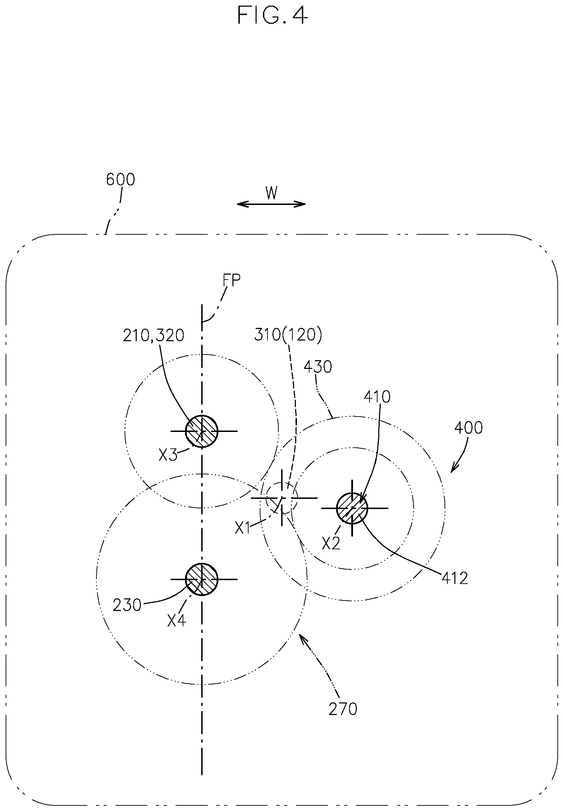

As illustrated in FIG. 4, in the present embodiment, the transmission input shaft 120 is arranged to have an axis line X1 positioned, in a case where it is viewed along the axial direction, between an axis line X3 of the HST input shaft 210 and an axis line X4 of the HST output shaft 230, and also positioned, in a case where it is assumed that a plane passing through the axis line of the HST input shaft 210 and the axis line X4 of the HST output shaft 320 is a virtual HST reference plane FP, on one side of the virtual HST reference plane FP with respect to a width direction W orthogonal to the virtual HST reference plane FP.

On the other hand, the planetary gear mechanism 400 is arranged to have an axis line X2 positioned on the opposite side of the axis line X1 of the transmission input shaft 120 from the virtual HST reference plane FP with respect to the width direction W, so that the axis line X1 of the transmission input shaft 120 being interposed therebetween in the width direction.

In addition, as illustrated in FIG. 1, the deceleration gear train 330 is inserted between the PTO transmission shaft 310 and a portion positioned on a downstream side of the planetary gear mechanism 400 in the power transmission direction, out of the PTO relay shaft 320.

With such a configuration, the axis line X1 to the axis line X4 of the transmission input shaft 120, the HST input shaft 210, the HST output shaft 230, the PTO transmission shaft 310, and the planetary gear mechanism 400 are arranged as closely as possible.

As illustrated in FIG. 1, the transmission apparatus 100A according to the present embodiment further includes a traveling transmission shaft 450 inserted between an output element (the planetary carrier 420 in the present embodiment) of the planetary gear mechanism 400 and the traveling output shaft 500 with respect to the power transmission direction of the traveling transmission path, and a forward/reverse movement switching mechanism 460 configured to operatively transmit, in a manner to switch between forward and reverse movements, to the traveling transmission shaft 450, the rotation power of the output element of the planetary gear mechanism 400.

The forward/reverse movement switching mechanism 460 is provided, and thus, it is possible to drive the traveling driving unit by the rotation power in both the forward and rear directions while forming the HST 200 and the planetary gear mechanism 400 so that the planetary gear mechanism 400 outputs the rotation power in only one direction of the forward and rear directions. Therefore, it is possible to expand a variable range of the traveling speed of the work vehicle 1A.

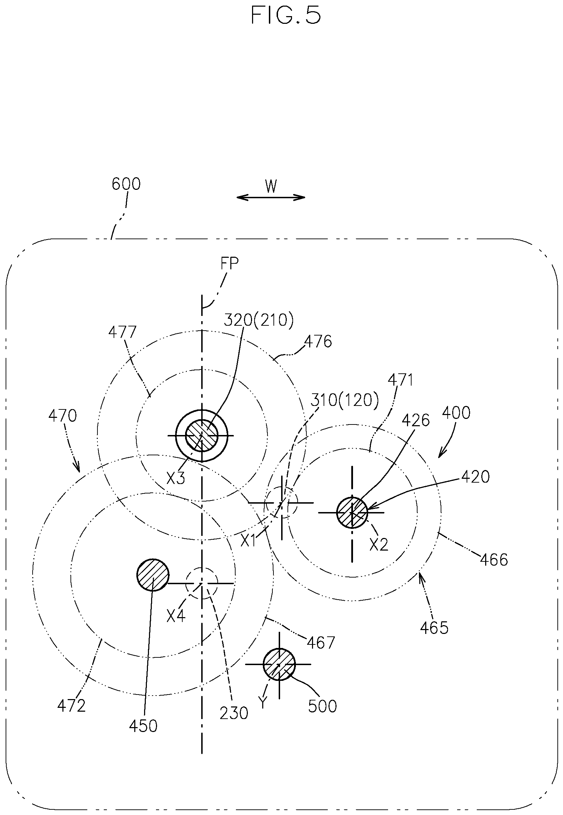

In the present embodiment, as illustrated in FIG. 5, the traveling transmission shaft 450 is arranged on the opposite side of the axis line of the transmission input shaft 120 (PTO transmission shaft 310) from the axis line of the planetary gear mechanism 400 in the width direction W, so that the axis line of the transmission input shaft 120 (PTO transmission shaft 310) is interposed between the axis lines of the traveling transmission shaft 450 and the planetary gear mechanism 400.

In addition, as illustrated in FIG. 1, the forward/reverse movement switching mechanism 460 includes: a first traveling transmission mechanism 465 including a first traveling driving gear 466 operatively coupled to the planetary carrier 420 and a first traveling driven gear 467 inserted around the traveling transmission shaft 450 so as to be relatively rotatable thereto around the axis and being meshed with the first traveling driving gear 466, the first traveling transmission mechanism 465 being configured to operatively transmit, as the rotation power in one direction of the forward and rear directions, the rotation power of the planetary carrier 420 to the first traveling driven gear 467; a second traveling transmission mechanism 470 including a second traveling driving gear 471 operatively coupled to the planetary carrier 420 and a second traveling driven gear 472 inserted around the traveling transmission shaft 450 so as to be relatively rotatable thereto around the axis, the second traveling transmission mechanism 470 being configured to operatively transmit, as the rotation power in the other direction of the forward and rear directions, the rotation power of the planetary carrier 420 to the second traveling driven gear 472; and a clutch mechanism 480 configured to selectively engage the first and second traveling driven transmission gears 467 and 472 with the traveling transmission shaft 450.

In the present embodiment, as illustrated in FIG. 1, the second traveling transmission mechanism 470 further includes a traveling relay shaft 475 inserted around the PTO relay shaft 320 so as to be relatively rotatable thereto around the axis, a first intermediate gear 476 supported on the traveling relay shaft 475 so as to be relatively non-rotatable thereto around the axis and meshed with the second traveling driving gear 471, and a second intermediate gear 477 supported on the traveling relay shaft 475 so as to be relatively non-rotatable thereto around the axis, and meshed with the second traveling driven gear 472. As a result, the second traveling driven gear 472 is rotated in the opposite direction with respect to the first traveling driven gear 467.

With such a configuration, although the forward/reverse movement switching mechanism 460 is provided, it is possible to reduce the size of the transmission apparatus 100A in the radial direction.

As illustrated in FIG. 1, the transmission apparatus 100A according to the present embodiment further includes a multistage transmission mechanism 490 configured to shift, in multiple stages, rotation power between the traveling transmission shaft 450 and the traveling output shaft 500.

As illustrated in FIG. 5, the traveling transmission shaft 450 is arranged on the opposite side of the virtual HST reference plane FP from the transmission input shaft 120 (the PTO transmission shaft 310) in the width direction W, and the traveling output shaft 500 is arranged between the virtual HST reference plane FP and the axis of the planetary gear mechanism 400 in the width direction W.

With such a configuration, it is possible to provide the multistage transmission mechanism 490 while preventing the transmission apparatus 100A from increasing in size as much as possible.

As illustrated in FIG. 1, the transmission apparatus 100A further includes a PTO power transmission direction downstream-side power transmitting structure 350 configured to operatively transmit the rotation power from the PTO transmission shaft 310 to the PTO output shaft 300, and a traveling power transmission direction downstream-side power transmitting structure 510 configured to operatively transmit the rotation power from the traveling output shaft 500 to the traveling driving unit (the rear wheel 20 in the present embodiment).

In the present embodiment, the PTO power transmission direction downstream-side power transmitting structure 350 includes a PTO clutch mechanism 360 configured to selectively engage and disengage the power transmission from the PTO transmission shaft 310 to the PTO output shaft 300, and a PTO multistage transmission mechanism 370 configured to shift, in multiple stages, the rotation power input operatively from the PTO transmission shaft 310 and to output the resultant rotation power toward the PTO output shaft 300.

The traveling power transmission direction downstream-side power transmitting structure 510 includes a pair of right and left driving axles 530, and a differential gear mechanism 520 configured to differentially transmit the rotation power of the traveling output shaft 500 to the pair of right and left driving axles.

Reference numeral 540 denotes a traveling brake mechanism capable of selectively applying a braking force to the driving axle 530.

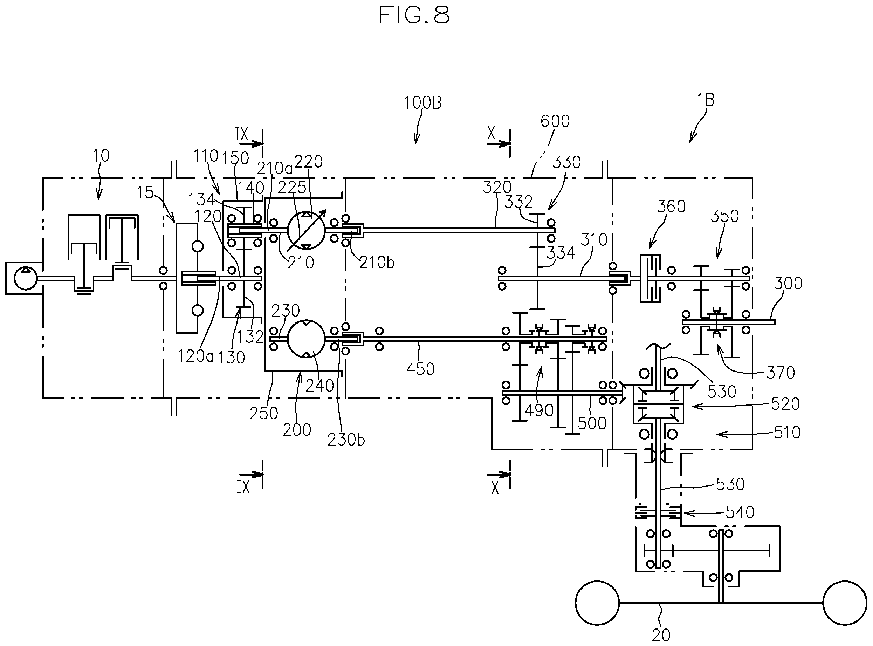

FIG. 8 is a schematic diagram illustrating a power transmitting structure of a work vehicle 1B including a transmission apparatus 100B according to a first modification of the present embodiment.

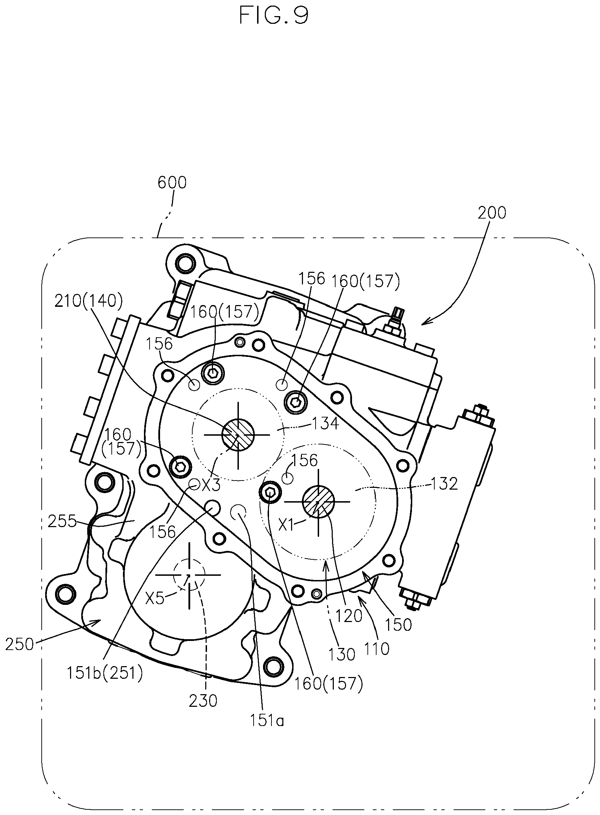

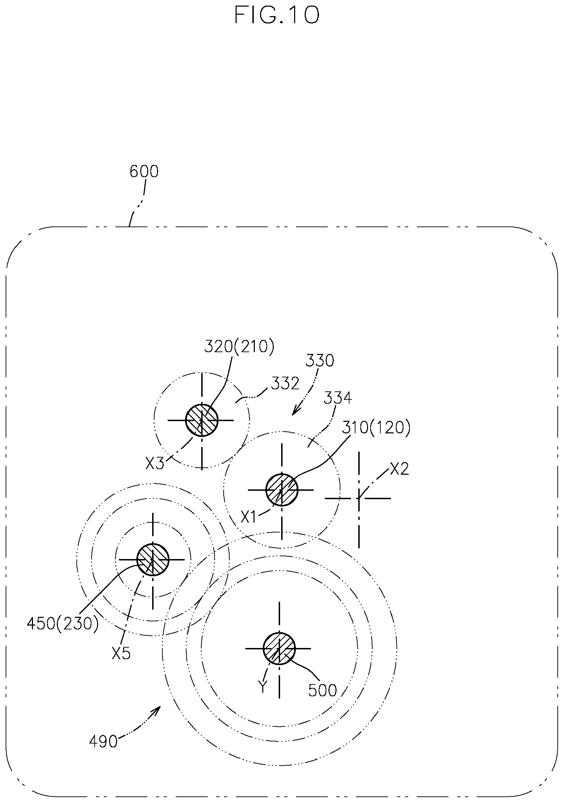

FIG. 9 and FIG. 10 are cross-sectional views of the transmission apparatus 100B taken along the lines IX-IX and X-X in FIG. 8, respectively.

In the drawings, the same members as those in the present embodiment are denoted by the same reference numerals, and detailed description thereof will be omitted where appropriate.

As illustrated in FIG. 8, the transmission apparatus 100B according to the first modification differs from the transmission apparatus 100A according to the present embodiment in that the planetary gear mechanism 400 and the forward/reverse movement switching mechanism 460 are omitted.

In the first modification 100B, the traveling transmission shaft 450 is coupled coaxially with the HST output shaft 230 so as to be relatively non-rotatable thereto around the axis.

Here, in the transmission apparatus 100A according to the embodiment and the transmission apparatus 100B according to the modification, the transmission case 600, the HST case 250, and the gear case 150 can be commonly used if both the apparatuses include the following configuration.

That is, as illustrated in FIG. 5, FIG. 6, and FIG. 10, the transmission case 600 is configured to support the PTO transmission shaft 310 on a first axis line X1 with respect to the transmission case 600, support the planetary gear mechanism 400 on a second axis line X2 with respect to the transmission case 600, and support the traveling output shaft 500 on a traveling output axis Y with respect to the transmission case 600.

The HST case 250 is detachably couplable to the transmission case 600 in a first posture (posture illustrated in FIG. 3) that causes the HST input shaft 210 to be positioned on a third axis line X3 with the transmission case 600 as a reference while causing the HST output shaft 230 to be positioned on a fourth axis line X4 with the transmission case 600 as a reference, and in a second posture (posture illustrated in FIG. 9, and in the illustrated configuration, the second posture is slightly swung clockwise around the axis (third axis line X3) of the HST input shaft 210 from the first gesture) that causes the HST input shaft 210 to be positioned on the third axis line X3 while causing the HST output shaft 230 to be positioned on a fifth axis line X5 with the transmission case 600 as a reference.

Further, the gear case 150 is configured to be detachably couplable to the HST case 250 in a first posture (see FIG. 3) and a second posture (see FIG.9) when the HST case is coupled to the transmission case 600 in the first posture and the second posture, respectively. The first posture (see FIG. 3) of the gear case 150 with respect to the HST case 250 causes the transmission input shaft 120 to be positioned on the first axis line X1 while causing the acceleration output shaft 140 to be positioned on the third axis line X3. The second posture (see FIG.9) of the gear case 150 with respect to the HST case 250 causes the transmission input shaft 120 to be positioned on the first axis line X1 while causing the acceleration output shaft 140 to be positioned on the third axis line X3.

Here, the attachment holes 156 and 157 formed in the gear case 150 will be described.

As described above, the gear case 150 is detachably coupled to the HST case 250 via the fastening members 160.

The attachment holes 156 are used as first posture attachment holes through which the fastening members 160 are inserted when the gear case 150 is coupled to the HST case 250 in the first posture (see FIG. 3).

On the other hand, the attachment holes 157 are used as second posture attachment holes through which the fastening members 160 are inserted when the gear case 150 is coupled to the HST case 250 in the second posture (see FIG. 9).

Although not illustrated, the HST case 250 is also detachably coupled to the transmission case 600 by HST case fastening members.

The HST case 250 is provided with the first posture attachment holes through which the HST case fastening members are inserted when the HST case 250 is coupled to the transmission case 600 in the first posture, and the second posture attachment holes through which the HST case fastening members are inserted when the HST case 250 is coupled to the transmission case 600 in the second posture.

According to such a configuration, without a requiring a substantial change of a transmission direction upstream-side power transmitting structure 15 configured to operatively transmit the rotation power from the drive source 10 to the transmission input shaft 120, the PTO transmission direction downstream-side power transmitting structure 350, and the traveling transmission direction downstream-side power transmitting structure 510, it is possible to easily change specifications between an HMT specification (hydro-static mechanical transmission structure) including the HST 200 and the planetary gear mechanism 400 and an HST specification (hydro-static transmission structure) without the planetary gear mechanism 400.

Lubricating oil and operating oil for the HST 200 and operating oil leaking from the pump main body 220 and the motor main body 240 are reserved in the HST case 250.

In the present embodiment, the acceleration gear train 130 is lubricated by introducing the oil reserved in the HST case 250 into the gear case 150.

More specifically, as illustrated in FIG. 3 and FIG. 9, a supply hole 251 by which an inner space of the HST case 250 is opened outward is provided on an abutment surface of the HST case 250 against the gear case 150.

On the other hand, as illustrated in FIG. 3 and FIG. 9, the abutment surface of the gear case 150 against the HST case 250 is provided with a first posture introduction hole 151a positioned at the same position as the supply hole 251 when the gear case 150 is coupled to the HST case 250 in the first posture and a second posture introduction hole 151b positioned at the same position as the supply hole 251 when the gear case 150 is coupled to the HST case 250 in the second posture, and even if the gear case 150 is coupled to the HST case 250 in either of the postures, that is, the first posture or the second posture, the reserved oil in the HST case 250 is introduced into the gear case 150.

The HST case 250 is configured to be detachably couplable to the transmission case 600 in a third posture that causes the HST input shaft 210 to be positioned on the first axis line X1, in addition to the first posture and the second posture. The attachment holes 156 and 157 and the introduction holes 151a and 151b may all be formed to be opened when the gear case 150 is manufactured, and at the time of selecting the attachment posture of the gear case 150, an unused hole may be closed with a cap. Alternatively, the attachment hole 156 (or 157) and the introduction hole 151a (or 151b) may be drilled by machining only at a position facing the HST case-side attachment hole 265 and the supply hole 251 when the attachment posture of the gear case 150 is determined.

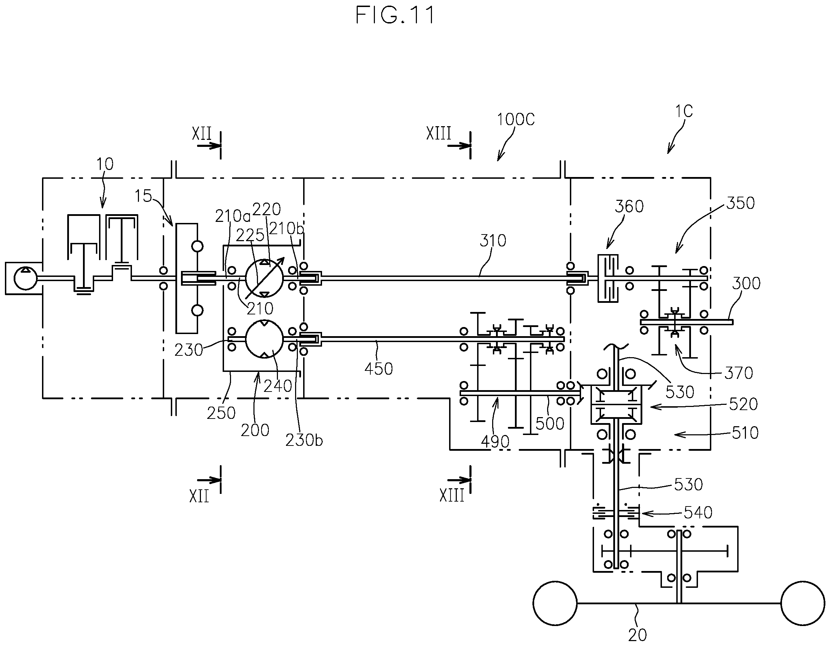

FIG. 11 is a schematic diagram illustrating a power transmitting structure of a work vehicle 1C including a transmission apparatus 100C according to a second modification in which the HST case 250 is coupled to the transmission case 600 in the third posture.

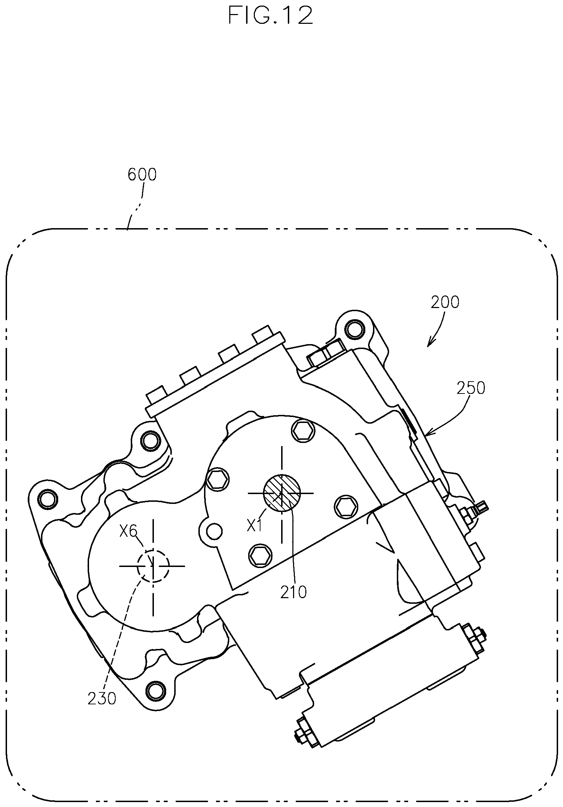

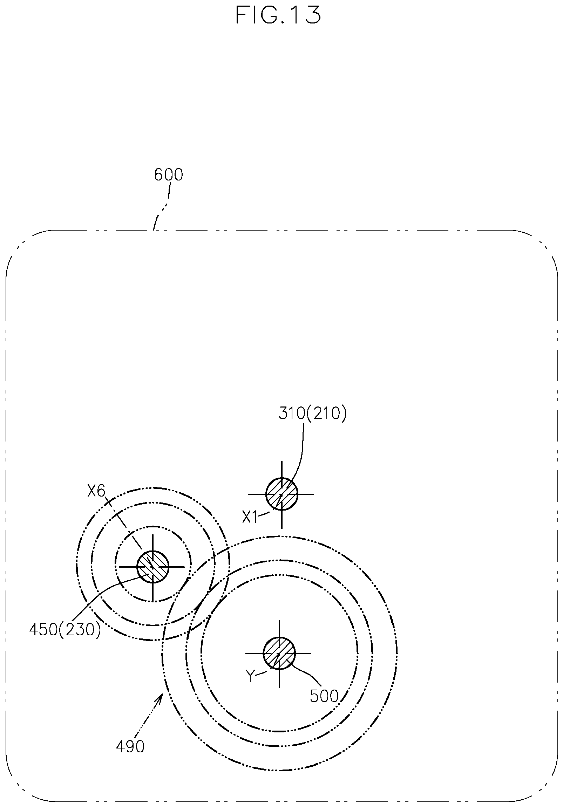

FIG. 12 and FIG. 13 are cross-sectional views of the transmission apparatus 100C taken along the lines XII-XII and XIII-XIII in FIG. 11, respectively.

In the drawings, the same members as those in the present embodiment and the first modification are denoted by the same reference numerals, and detailed description thereof will be omitted as appropriate.

As illustrated in FIG. 11, in the transmission apparatus 100C according to the second modification, the acceleration gear unit 110 including the acceleration gear train 130, and the deceleration gear train 330 are omitted.

As illustrated in FIG. 12 and FIG. 13, in the transmission apparatus 100C according to the second modification, the HST input shaft 210 is arranged on the first axis line X1, and the PTO transmission shaft 310 is arranged coaxially with the HST input shaft 210 (that is, on the first axis line X1), and is coupled to the second end 210b of the HST input shaft 210 so as to be relatively non-rotatable thereto around the axis.

Further, the traveling transmission shaft 450 is arranged coaxially with the HST output shaft 230, and is coupled to the second end 230b of the HST output shaft 230 so as to be relatively non-rotatable thereto around the axis.

The traveling output shaft 500 is arranged on the traveling output axis Y, as in the present embodiment and the first modification.

As illustrated in FIG. 11, the transmission apparatus 100C according to the second modification includes the multistage transmission mechanism 490 configured to shift, in multiple stages, rotation power between the traveling transmission shaft 450 and the traveling output shaft 500.

Accordingly, the third posture of the HST case 250 is set to cause the HST output shaft 230, on which the traveling transmission shaft 450 is coaxially arranged, to be positioned on such a sixth axis line X6 that allows the power transmission from the traveling transmission shaft 450 to the traveling output shaft 500 via the multistage transmission mechanism to be realized while causing the HST input shaft 210 to be positioned on the first axis line X1.

According to such a configuration, without a requiring a substantial change of the transmission direction upstream-side power transmitting structure 15, the PTO transmission direction downstream-side power transmitting structure 350, and the traveling transmission direction downstream-side power transmitting structure 510, it is possible to make a change in specification to the HST specification without the acceleration gear train 130 and the deceleration gear train 330.

In the present embodiment, an HST unit formed by the HST 200 and the acceleration gear unit 110 is configured so that the transmission input shaft 120, the acceleration output shaft 140 and the acceleration gear train 130 are supported or housed by the gear case 150 separate from the HST case 250, and the gear case 150 is detachably connected to the HST case 250 (see FIG. 7, for example).

Alternatively, it is possible that an acceleration gear unit 110D including a transmission input shaft 120D, an acceleration output shaft 140D and an acceleration gear train 130D are supported or housed by an HST case 250D.

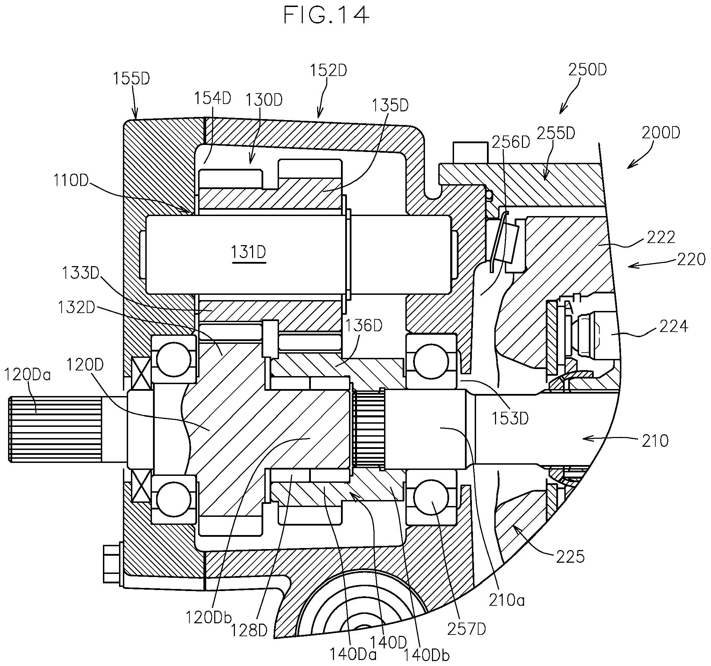

FIG. 14 is a cross-sectional view of a part of an HST unit according to a modification of the HST unit in the present embodiment.

In FIG. 14, the same components as those in the HST unit in the present embodiment are designated by the same reference numerals.

As shown in FIG. 14, the HST unit includes an HST 200D and the acceleration gear unit 110D.

The HST 200D includes the HST input shaft 210, the pump main body 220, the motor main body 240 (not shown in FIG14, and see, for example, FIG. 1), the HST output shaft 230 (not shown in FIG14, and see, for example, FIG. 1), and the HST case 250D supporting the HST input shaft 210 and the HST output shaft 230 so as to be rotatable around respective axis lines and housing the pump main body 220 and the motor main body 240 respectively supported on the HST input shaft 210 and the HST output shaft 230.

The acceleration gear unit 110D includes the transmission input shaft 120D, the acceleration output shaft 140D and the acceleration gear train 130D. The acceleration gear train 130D accelerates rotation power of the transmission input shaft 120D and transmits the accelerated rotation power to the acceleration output shaft 140D.

The transmission input shaft 120D has first and second ends 120Da, 120Db respectively on one side and the other side in the axial direction, and operatively inputs rotation power from the driving source 10 (see, for example, FIG. 1) at the first end 120Da.

The acceleration output shaft 140D is arranged coaxially with the HST input shaft 210 and is detachably connected to the first end 210a of the HST input shaft 210 so as to be relatively non-rotatable around the axis line thereto.

In the modified HST unit shown in FIG. 14, the HST case 250D is configured to support the transmission input shaft 120D so as to be rotatable around the axis line while allowing access to the first end 120Da of the transmission input shaft 120D from outside, support the acceleration output shaft 140D directly or indirectly so as to be rotatable around the axis line, and house the acceleration gear train 130D, in addition to supporting the HST input shaft 210 and the HST output shaft 230 and housing the pump main body 220 and the motor main body 240.

Specifically, the HST case 250D includes the port block (not shown), an HST accommodating body 255D detachably coupled to the port block to form an HST space for housing the pump main body 220 and the motor main body 240, a gear accommodating body 152D detachably coupled to the HST accommodating body 255D, and a gear cover 155D detachably coupled to the gear accommodating body 152D.

The HST accommodating body 255D has an opening 256D at a first end surface to which the gear accommodating body 152D is coupled, and an opening (not shown) at a second end surface to which the port block is coupled, the opening at the second end surface allowing the pump main body 220 and the motor main body 240 to be inserted.

The gear accommodating body 152D is detachably coupled to the HST accommodating body 255D so as to close the opening 256D.

A contact end surface of the gear accommodating body 152D that is brought into contact to the HST accommodating body 255D is formed with an opening 153D allowing the first end 210a of the HST input shaft 210 to be inserted into the inner space of the gear accommodating body 152D.

An end surface of the gear accommodating body 152D opposite from the HST accommodating body 255D is formed with an opening 154D allowing the acceleration gear train 130D to be inserted.

The acceleration output shaft 140D has a first end 140Da inputting rotation power from the acceleration gear train 130D and a second end 140Db connected to the first end 210a of the HST input shaft 210 by spline coupling structure.

The modified HST unit shown in FIG. 14, the first end 210a of the HST input shaft 210 is supported by a bearing member 257D arranged within the opening 153D so as to be rotatable around the axis line, and whereby the acceleration output shaft 140D is indirectly supported by the HST case 250D (the gear accommodating body 152D) so as to be rotatable around the axis line.

The acceleration gear train 130D includes an idle shaft 131D displaced from the transmission input shaft 120D and the acceleration output shaft 140D, a first driving-side gear 132D arranged on the transmission input shaft 120D so as to be relatively non-rotatable around the axis line thereto, a first driven-side gear 133D meshed with the first driving-side gear 132D and arranged on the idle shaft 131D, a second driving-side gear 135D arranged on the idle shaft 131D so as to be relatively non-rotatable around the axis line to the first driven-side gear 133D, and a second driven-side gear 136D meshed with the second driving-side gear 135D and arranged on the acceleration output shaft 136D so as to be relatively non-rotatable around the axis line thereto.

In the modified HST unit, the first driven-side gear 133D and the second driving-side gear 135D are integrally formed by a single member that is supported on the idle shaft 131D so as to be relatively rotatable around the axis line thereto.

At least one of a first gear train formed by the first driving-side gear 132D and the first driven-side gear 133D and a second gear train formed by the second driving-side gear 135D and the acceleration output shaft 136D is configured to accelerate rotational power.

In the modified HST unit shown in FIG. 14, the transmission input shaft 120D is arranged coaxially with the acceleration output shaft 140D.

Further, one (the first end 140Da of the acceleration output shaft 140D in FIG. 14) of the second end 120Db of the transmission input shaft 120D that is close to the acceleration output shaft 140D and the first end 140Da of the acceleration output shaft 140D is formed with a concave portion that is opened at a corresponding end surface.

The other one of the second end 120Db of the transmission input shaft 120D and the first end 140Da of the acceleration output shaft 140D is supported by a bearing member 128D arranged within the concave portion so as to be rotatable around the axis line.

## Claims

1. A transmission apparatus for work vehicle (100A, 100B), comprising:
a transmission input shaft (120) to which rotation power is operatively input from a drive source (10); an HST (200) including an HST input shaft (210), a pump main body (220) supported on the HST input shaft (210), a motor main body (240) hydraulically driven by the pump main body (220), and an HST output shaft (230) configured to support the motor main body (240), the HST (200) being configured to output traveling rotation power from the HST output shaft (230) toward a traveling driving unit (20); a PTO output shaft (300) from which rotation power is output to outside; and a PTO transmission shaft (310) forming at least a part of a PTO transmission path from the HST input shaft (210) to the PTO output shaft (300),
wherein
the HST input shaft (210) is displaced from an axis of the transmission input shaft (120), and the HST output shaft (230) is displaced from both axes of the transmission input shaft (120) and the HST input shaft (210),
the PTO transmission shaft (310) is arranged coaxially with the transmission input shaft (120) on a downstream side of the HST (200) in a power transmission direction,
the transmission apparatus for work vehicle (100A, 100B) further comprises an acceleration gear train (130) configured to accelerate rotation power of the transmission input shaft (120), and a deceleration gear train (330) configured to decelerate a rotation power input operatively from a second end (210b) of the HST input shaft (210) on a downstream side in the power transmission direction,
the HST input shaft (210) operatively receives, at a first end (210a) on one side in an axial direction, the rotation power from the drive source (10) that is accelerated by the acceleration gear train (130), and
the PTO transmission shaft (310) operatively receives the rotation power from a second end (210b) of the HST input shaft (210) that is decelerated by the deceleration gear train (330),
wherein the acceleration gear train (130) and the deceleration gear train (330) have such transmission ratios as that the rotation speeds of the transmission input shaft (120) and the PTO transmission shaft (310) are the same.

2. The transmission apparatus for work vehicle (100A) according to claim 1, comprising: a planetary gear mechanism (400); and a PTO relay shaft (320) arranged coaxially with the HST input shaft (210) and coupled to the second end (210b) of the HST input shaft (210) so as to be relatively non-rotatable thereto around the axis, wherein
the transmission input shaft (120) is arranged so as to have an axis line that is positioned, in a case where it is viewed in an axial direction, between the axis lines of the HST input shaft (210) and the HST output shaft (230), and is also positioned, in a case where a plane passing through the axis lines of the HST input shaft (210) and the HST output shaft (320) is referred to as a virtual HST reference plane (FP), on one side of the virtual HST reference plane (FP) in a width direction orthogonal to the virtual HST reference plane (FP),
the planetary gear mechanism (400) includes a sun gear (410) operatively receiving an HST output from the HST output shaft (230) and positioned on an axis line that is arranged on an opposite side of the transmission input shaft (120) from the virtual HST reference plane (FP) in the width direction so that the axis line of the transmission input shaft (120) being interposed therebetween, an internal gear (430) operatively receiving a drive source output from the PTO relay shaft (320), and a planetary carrier (420) outputting combined rotation power of the HST output and the drive source output, and
the deceleration gear train (330) is inserted between the PTO transmission shaft (310) and a portion of the PTO relay shaft (320) that is positioned on a downstream side of the planetary gear mechanism (400) in the power transmission direction.

3. The transmission apparatus for work vehicle (100A) according to claim 2, comprising: a traveling transmission shaft (450) having an axis line arranged on an opposite side of the axis line of the transmission input shaft (120) from the axis line of the planetary gear mechanism (400) in the width direction so that the axis line of the transmission input shaft (120) being interposed therebetween; and a forward/reverse movement switching mechanism (460) configured to operatively transmit rotation power of the planetary carrier (420) to the traveling transmission shaft (450) in a manner to switch between forward and reverse movements, wherein
the forward/reverse movement switching mechanism (460) includes: a first traveling transmission mechanism (465) including a first traveling driving gear (466) operatively coupled to the planetary carrier (420) and a first traveling driven gear (467) inserted around the traveling transmission shaft (450) so as to be relatively rotatable thereto and being meshed with the first traveling driving gear (466), the first traveling transmission mechanism (465) operatively transmitting, as rotation power in one direction of the forward and rear directions, the rotation power of the planetary carrier (420) to the first traveling driven gear (467); a second traveling transmission mechanism (470) including a second traveling driving gear (471) operatively coupled to the planetary carrier (420) and a second traveling driven gear (472) inserted around the traveling transmission shaft (450) so as to be relatively rotatable thereto, the second traveling transmission mechanism (470) being configured to operatively transmit, as rotation power in the other direction of the forward and rear directions, the rotation power of the planetary carrier (420) to the second traveling driven gear (472); and a clutch mechanism (480) configured to selectively engage the first and second traveling driven gears (467, 472) with the traveling transmission shaft (450), and
the second traveling transmission mechanism (470) further includes a traveling relay shaft (475) inserted around the PTO relay shaft (320) so as to be relatively rotatable thereto, a first intermediate gear (476) supported on the traveling relay shaft (475) so as to be relatively non-rotatable thereto and meshed with the second traveling driving gear (471), and a second intermediate gear (477) supported on the traveling relay shaft (475) so as to be relatively non-rotatable thereto and meshed with the second traveling driven gear (472) via an idle gear.

4. The transmission apparatus for work vehicle (100A) according to claim 3, comprising: a traveling output shaft (500) arranged parallel to the traveling transmission shaft (450); and a multistage transmission mechanism (490) configured to shift, in multiple stages, rotation power between the traveling transmission shaft (450) and the traveling output shaft (500).

5. The transmission apparatus for work vehicle (100A) according to claim 4, wherein the traveling transmission shaft (450) is arranged on the opposite side of the virtual HST reference plane (FP) from the transmission input shaft (120) in the width direction, and
the traveling output shaft (500) is arranged between the virtual HST reference plane (FP) and the axis line of the planetary gear mechanism (400) with respect to the width direction.

6. The transmission apparatus for work vehicle (100A) according to any one of claims 2 to 5, comprising:
an acceleration output shaft (140) outputting rotation power accelerated by the acceleration gear train (130);
a gear case (150) configured to support the transmission input shaft (120) and the acceleration output shaft (140) and to house the acceleration gear train (130);
an HST case (250) configured to support the HST input shaft (210) and the HST output shaft (230) and to house the pump main body (220) and the motor main body (240); and
a transmission case (600) configured to support the PTO relay shaft (320) and the PTO transmission shaft (310) and to house the planetary gear mechanism (400) and the deceleration gear train (330), wherein
the acceleration output shaft (140) and the HST input shaft (210) are configured to be coupled to each other so as to be relatively non-rotatable around the axis to each other by connecting the gear case (150) to the HST case (250),
the transmission case (600) is configured to support the PTO transmission shaft (310) on a first axis line and to support the planetary gear mechanism (400) on a second axis line,
the HST case (250) is configured to be detachably connected to the transmission case (600) in first and second postures, the first posture causing the HST input shaft (210) to be positioned on a third axis line while causing the HST output shaft (230) to be positioned on a fourth axis line, the second posture causing the HST output shaft (230) to be positioned on a fifth axis line while causing the HST input shaft (210) to be positioned on the third axis line, and
the gear case (150) is detachably connected to the HST case (250) in first and second postures in a case where the HST case is coupled to the transmission case (600) in the first and second postures, respectively, the first posture of the gear case (150) relative to the HST case (250) causing the transmission input shaft (120) to be positioned on the first axis line while causing the acceleration output shaft (140) to be positioned on the third axis line, the second posture of the gear case (150) relative to the HST case (250) causing the transmission input shaft (120) to be positioned on the first axis line while causing the acceleration output shaft (140) to be positioned on the third axis line.

7. The transmission apparatus for work vehicle (100A) according to claim 6, wherein the HST case (250) is also detachably connected to the transmission case (600) in a third posture causing the HST input shaft (210) to be positioned on the first axis line, in addition to the first and second postures.

8. The transmission apparatus for work vehicle (100A, 100B) according to claim 1, comprising: a multistage transmission mechanism (490) inserted between the HST (200) and the traveling driving unit (20) in a traveling transmission path, the multistage transmission mechanism (490) shifting, in multiple stages, rotation power operatively input from the HST output shaft (230) and outputting the resultant rotation power toward the traveling driving unit (20).

## Patentansprüche

1. Getriebevorrichtung für ein Arbeitsfahrzeug (100A, 100B), umfassend:
eine Getriebeantriebswelle (120), an die während des Betriebes von einer Antriebsquelle (10) eine Rotationskraft angelegt wird;
ein hydrostatisches Getriebe (Hydrostatic Transmission, HST) (200), das eine HST-Antriebswelle (210), einen auf der HST-Antriebswelle (210) gelagerten Pumpenhauptkörper (220), einen durch den Pumpenhauptkörper (220) hydraulisch angetriebenen Motorhauptkörper (240), und eine HST-Abtriebswelle (230), die dafür eingerichtet ist, den Motorhauptkörper (240) zu stützen, umfasst, wobei das HST (200) dafür eingerichtet ist, eine Fahrrotationskraft von der HST-Abtriebswelle (230) in Richtung einer Fahrantriebseinheit (20) abzugeben;
eine Nebenantriebs (Power Take-Off, PTO)-Abtriebswelle (300), von der eine Rotationskraft nach außen abgegeben wird; und
eine PTO-Getriebewelle (310), die mindestens einen Teil eines PTO-Getriebepfades von der HST-Antriebswelle (210) zu der PTO-Abtriebswelle (300) bildet,
wobei
die HST-Antriebswelle (210) von einer Achse der Getriebeantriebswelle (120) verschoben ist und die HST-Abtriebswelle (230) von beiden Achsen der Getriebeantriebswelle (120) und der HST-Antriebswelle (210) verschoben ist,
die PTO-Getriebewelle (310) koaxial mit der Getriebeantriebswelle (120) auf einer stromabwärtigen Seite des HST (200) in einer Kraftübertragungsrichtung angeordnet ist,
die Getriebevorrichtung für ein Arbeitsfahrzeug (100A, 100B) des Weiteren einen Beschleunigungsgetriebestrang (130) umfasst, der dafür eingerichtet ist, die Rotationskraft der Getriebeantriebswelle (120) zu beschleunigen, sowie einen Verlangsamungsgetriebestrang (330) umfasst, der dafür eingerichtet ist, eine Rotationskraft, die während des Betriebes von einem zweiten Ende (210b) der HST-Antriebswelle (210) auf einer stromabwärtigen Seite in der Kraftübertragungsrichtung angelegt wird, zu verlangsamen,
die HST-Antriebswelle (210) an einem ersten Ende (210a) auf einer Seite in einer axialen Richtung die Rotationskraft von der Antriebsquelle (10), die durch den Beschleunigungsgetriebestrang (130) beschleunigt wird, während des Betriebes zu empfangen, und
die PTO-Getriebewelle (310) die Rotationskraft von einem zweiten Ende (210b) der HST-Antriebswelle (210), die durch den Verlangsamungsgetriebestrang (330) verzögert wird, während des Betriebes empfängt,
wobei der Beschleunigungsgetriebestrang (130) und der Verlangsamungsgetriebestrang (330) solche Übersetzungsverhältnisse aufweisen, dass die Drehzahlen der Getriebeantriebswelle (120) und der PTO-Getriebewelle (310) gleich sind.

2. Getriebevorrichtung für ein Arbeitsfahrzeug (100A) nach Anspruch 1, umfassend:
einen Planetengetriebemechanismus (400); und
eine PTO-Umlenkwelle (320), die koaxial mit der HST-Antriebswelle (210) angeordnet und mit dem zweiten Ende (210b) der HST-Antriebswelle (210) gekoppelt ist, so dass sie sich relativ zu ihr nicht um die Achse drehen kann, wobei
die Getriebeantriebswelle (120) so angeordnet ist, dass sie eine Achsenlinie aufweist, die für den Fall, dass sie in einer axialen Richtung betrachtet wird, zwischen den Achsenlinien der HST-Antriebswelle (210) und der HST-Abtriebswelle (230) positioniert ist, und auch für den Fall, dass eine Ebene, die durch die Achsenlinien der HST-Antriebswelle (210) und der HST-Abtriebswelle (320) verläuft, als eine virtuelle HST-Referenzebene (FP) bezeichnet wird, auf einer Seite der virtuellen HST-Referenzebene (FP) in einer Breitenrichtung orthogonal zu der virtuellen HST-Referenzebene (FP) positioniert ist,
der Planetengetriebemechanismus (400) umfasst: ein Sonnenrad (410), das während des Betriebes eine HST-Abtriebskraft von der HST-Abtriebswelle (230) empfängt und auf einer Achsenlinie positioniert ist, die auf einer der virtuellen HST-Referenzebene (FP) in der Breitenrichtung gegenüberliegenden Seite der Getriebeantriebswelle (120) angeordnet ist, so dass die Achsenlinie der Getriebeantriebswelle (120) dazwischen angeordnet ist, ein Innenzahnrad (430), das während des Betriebes eine Antriebsquellen-Abtriebskraft von der PTO-Umlenkwelle (320) empfängt, und einen Planetenträger (420), der eine kombinierte Rotationskraft aus der HST-Abtriebskraft und der Antriebsquellen-Abtriebskraft abgibt, und
der Verlangsamungsgetriebestrang (330) zwischen der PTO-Getriebewelle (310) und einem Abschnitt der PTO-Umlenkwelle (320) eingefügt ist, der auf einer stromabwärtigen Seite des Planetengetriebemechanismus (400) in der Kraftübertragungsrichtung angeordnet ist.

3. Getriebevorrichtung für ein Arbeitsfahrzeug (100A) nach Anspruch 2, umfassend:
eine Fahrgetriebewelle (450), deren Achsenlinie auf einer der Achsenlinie des Planetengetriebemechanismus (400) in der Breitenrichtung gegenüberliegenden Seite der Achsenlinie der Getriebeantriebswelle (120) angeordnet ist, so dass die Achsenlinie der Getriebeantriebswelle (120) dazwischen angeordnet ist; und
einen Vorwärts-/Rückwärtsbewegungs-Umschaltmechanismus (460), der dafür eingerichtet ist, die Rotationskraft des Planetenträgers (420) während des Betriebes in einer solchen Weise zu der Fahrgetriebewelle (450) zu übertragen, dass zwischen Vorwärts- und Rückwärtsbewegungen umgeschaltet wird, wobei
der Vorwärts-/Rückwärtsbewegungs-Umschaltmechanismus (460) umfasst:
einen ersten Fahrgetriebemechanismus (465), der ein erstes Antriebs-Fahrzahnrad (466) umfasst, das mit dem Planetenträger (420) wirkgekoppelt ist, sowie ein erstes angetriebenes Fahrzahnrad (467) umfasst, das um die Fahrgetriebewelle (450) herum so eingesetzt ist, dass es sich relativ dazu drehen kann und mit dem ersten Fahrantriebszahnrad (466) in Eingriff steht, wobei der erste Fahrgetriebemechanismus (465) während des Betriebes die Rotationskraft des Planetenträgers (420) als Rotationskraft in der einen Richtung der Vorwärts- und der Rückwärtsrichtung zu dem ersten angetriebenen Fahrzahnrad (467) überträgt;
einen zweiten Fahrgetriebemechanismus (470), der ein zweites Antriebs-Fahrzahnrad (471) umfasst, das mit dem Planetenträger (420) wirkgekoppelt ist, sowie ein zweites angetriebenes Fahrzahnrad (472) umfasst, das um die Fahrgetriebewelle (450) herum so eingesetzt ist, dass es sich relativ dazu drehen kann, wobei der zweite Fahrgetriebemechanismus (470) dafür eingerichtet ist, die Rotationskraft des Planetenträgers (420) während des Betriebes als Rotationskraft in der anderen Richtung der Vorwärts- und der Rückwärtsrichtung zu dem zweiten angetriebenen Fahrzahnrad (472) zu übertragen; und
einen Kupplungsmechanismus (480), der dafür eingerichtet ist, das erste und das zweite angetriebene Fahrzahnrad (467, 472) selektiv mit der Fahrgetriebewelle (450) in Eingriff zu bringen, und
der zweite Fahrgetriebemechanismus (470) des Weiteren umfasst: eine Fahrumlenkwelle (475), die um die PTO-Umlenkwelle (320) herum so eingesetzt ist, dass sie sich relativ zu ihr drehen kann, ein erstes Zwischenzahnrad (476), das auf der Fahrumlenkwelle (475) so gelagert ist, dass es sich relativ zu ihr nicht drehen kann und mit dem zweiten Antriebs-Fahrzahnrad (471) in Eingriff steht, und ein zweites Zwischenzahnrad (477), das auf der Fahrumlenkwelle (475) so gelagert ist, dass es sich relativ zu ihr nicht drehen kann und mit dem zweiten angetriebenen Fahrzahnrad (472) über ein Zwischenrad in Eingriff steht.

4. Getriebevorrichtung für ein Arbeitsfahrzeug (100A) nach Anspruch 3, umfassend:
eine Fahrabtriebswelle (500), die parallel zu der Fahrgetriebewelle (450) angeordnet ist; und
einen mehrstufigen Getriebemechanismus (490), der dafür eingerichtet ist, die Rotationskraft zwischen der Fahrgetriebewelle (450) und der Fahrabtriebswelle (500) in mehreren Stufen umzuschalten.

5. Getriebevorrichtung für ein Arbeitsfahrzeug (100A) nach Anspruch 4, wobei die Fahrgetriebewelle (450) auf der der Getriebeantriebswelle (120) in der Breitenrichtung gegenüberliegenden Seite der virtuellen HST-Referenzebene (FP) angeordnet ist, und
die Fahrabtriebswelle (500) zwischen der virtuellen HST-Referenzebene (FP) und der Achslinie des Planetengetriebemechanismus (400) in Bezug auf die Breitenrichtung angeordnet ist.

6. Getriebevorrichtung für ein Arbeitsfahrzeug (100A) nach einem der Ansprüche 2 bis 5, umfassend:
eine Beschleunigungsabtriebswelle (140), welche die durch das Beschleunigungsgetriebe (130) beschleunigte Rotationskraft abgibt;
ein Getriebegehäuse (150), das dafür eingerichtet ist, die Getriebeantriebswelle (120) und die Beschleunigungsabtriebswelle (140) zu stützen und den Beschleunigungsgetriebestrang (130) aufzunehmen;
ein HST-Gehäuse (250), das dafür eingerichtet ist, die HST-Antriebswelle (210) und die HST-Abtriebswelle (230) zu stützen und den Pumpenhauptkörper (220) und den Motorhauptkörper (240) aufzunehmen; und
ein Getriebegehäuse (600), das dafür eingerichtet ist, die PTO-Umlenkwelle (320) und die PTO-Getriebewelle (310) zu stützen und den Planetengetriebemechanismus (400) und den Verlangsamungsgetriebestrang (330) aufzunehmen, wobei die Beschleunigungsabtriebswelle (140) und die HST-Antriebswelle (210) dafür eingerichtet sind, durch Verbinden des Getriebegehäuses (150) mit dem HST-Gehäuse (250) so miteinander gekoppelt zu werden, dass sie sich relativ zueinander nicht um die Achse drehen können,
das Getriebegehäuse (600) dafür eingerichtet ist, die PTO-Getriebewelle (310) auf einer ersten Achsenlinie zu stützen und den Planetengetriebemechanismus (400) auf einer zweiten Achsenlinie zu stützen,
das HST-Gehäuse (250) dafür eingerichtet ist, in einer ersten und einer zweiten Lage lösbar mit dem Getriebegehäuse (600) verbunden zu werden, wobei die erste Lage bewirkt, dass die HST-Antriebswelle (210) auf einer dritten Achsenlinie positioniert ist, während sie bewirkt, dass die HST-Abtriebswelle (230) auf einer vierten Achsenlinie positioniert ist, wobei die zweite Lage bewirkt, dass die HST-Abtriebswelle (230) auf einer fünften Achsenlinie positioniert ist, während sie bewirkt, dass die HST-Antriebswelle (210) auf der dritten Achsenlinie positioniert ist, und
das Getriebegehäuse (150) in einer ersten und einer zweiten Lage lösbar mit dem HST-Gehäuse (250) verbunden ist, falls das HST-Gehäuse mit dem Getriebegehäuse (600) in der ersten bzw. der zweiten Lage gekoppelt ist, wobei die erste Lage des Getriebegehäuses (150) relativ zu dem HST-Gehäuse (250) bewirkt, dass die Getriebeantriebswelle (120) auf der ersten Achsenlinie positioniert ist, während sie bewirkt, dass die Beschleunigungsabtriebswelle (140) auf der dritten Achsenlinie positioniert ist, wobei die zweite Lage des Getriebegehäuses (150) relativ zu dem HST-Gehäuse (250) bewirkt, dass die Getriebeantriebswelle (120) auf der ersten Achsenlinie positioniert ist, während sie bewirkt, dass die Beschleunigungsabtriebswelle (140) auf der dritten Achsenlinie positioniert ist.

7. Getriebevorrichtung für ein Arbeitsfahrzeug (100A) nach Anspruch 6, wobei das HST-Gehäuse (250), zusätzlich zu der ersten und der zweiten Lage, auch in einer dritten Lage, die bewirkt, dass die HST-Antriebswelle (210) auf der ersten Achsenlinie positioniert ist, lösbar mit dem Getriebegehäuse (600) verbunden ist.

8. Getriebevorrichtung für ein Arbeitsfahrzeug (100A, 100B) nach Anspruch 1, umfassend:
einen mehrstufigen Getriebemechanismus (490), der zwischen dem HST (200) und der Fahrantriebseinheit (20) in einem Fahrübertragungspfad eingefügt ist, wobei der mehrstufige Getriebemechanismus (490) die von der HST-Abtriebswelle (230) während des Betriebes angelegte Rotationskraft in mehreren Stufen umschaltet und die resultierende Rotationskraft in Richtung der Fahrantriebseinheit (20) abgibt.

## Revendications

1. Appareil de transmission pour véhicule de travail (100A, 100B), comprenant :
un arbre d'entrée de boîte de vitesses (120) auquel est appliquée fonctionnellement une puissance de rotation provenant d'une source d'entraînement (10); une transmission hydrostatique (200) (HST) comportant un arbre d'entrée de transmission HST (210), un corps principal de pompe (220) supporté par l'arbre d'entrée de transmission HST (210), un corps principal de moteur (240) entraîné hydrauliquement par le corps principal de pompe (220), et un arbre de sortie de transmission HST (230) configuré pour supporter le corps principal de moteur (240), la transmission HST (200) étant configurée pour délivrer une puissance de rotation de déplacement depuis l'arbre de sortie de transmission HST (230) vers une unité d'entraînement de déplacement (20) ; un arbre de sortie de prise de force (300) à partir duquel une puissance de rotation est délivrée vers l'extérieur ; et un arbre de transmission de prise de force (310) formant au moins une partie d'un trajet de transmission de prise de force, de l'arbre d'entrée de transmission HST (210) à l'arbre de sortie de prise de force (300),
dans lequel l'arbre d'entrée de transmission HST (210) est déplacé par rapport à un axe de l'arbre d'entrée de boîte de vitesses (120), et l'arbre de sortie de transmission HST (230) est déplacé par rapport aux deux axes de l'arbre d'entrée de boîte de vitesses (120) et de l'arbre d'entrée de transmission HST (210),
l'arbre de transmission de prise de force (310) est disposé coaxialement à l'arbre d'entrée de boîte de vitesses (120) sur un côté aval de la transmission HST (200) dans un sens de transmission de puissance,
l'appareil de transmission pour véhicule de travail (100A, 100B) comprend en outre un train d'engrenages d'accélération (130) configuré pour accélérer la puissance de rotation de l'arbre d'entrée de boîte de vitesses (120), et un train d'engrenages de décélération (330) configuré pour décélérer une puissance de rotation appliquée fonctionnellement depuis une seconde extrémité (210b) de l'arbre d'entrée de transmission HST (210) sur un côté aval dans le sens de transmission de puissance,
l'arbre d'entrée de transmission HST (210) reçoit fonctionnellement, à une première extrémité (210a) d'un côté dans une direction axiale, en provenance de la source d'entraînement (10), la puissance de rotation qui est accélérée par le train d'engrenages d'accélération (130), et
l'arbre de transmission de prise de force (310) reçoit fonctionnellement, depuis une seconde extrémité (210b) de l'arbre d'entrée de transmission HST (210), la puissance de rotation qui est décélérée par le train d'engrenages de décélération (330),
dans lequel le train d'engrenages d'accélération (130) et le train d'engrenages de décélération (330) ont des rapports de transmission tels que les vitesses de rotation de l'arbre d'entrée de boîte de vitesses (120) et de l'arbre de transmission de prise de force (310) sont les mêmes.

2. Appareil de transmission pour véhicule de travail (100A) selon la revendication 1, comprenant :
un mécanisme d'engrenage planétaire (400) ; un arbre relais de prise de force (320) disposé coaxialement à l'arbre d'entrée de transmission HST (210) et accouplé à la seconde extrémité (210b) de l'arbre d'entrée de transmission HST (210) de manière à ne pas pouvoir tourner par rapport à celui-ci autour de l'axe, dans lequel :
l'arbre d'entrée de boîte de vitesses (120) est disposé de manière à avoir une ligne d'axe qui est positionnée, dans le cas où il est vu dans une direction axiale, entre les lignes d'axe de l'arbre d'entrée de transmission HST (210) et de l'arbre de sortie de transmission HST (230), et est également positionné, dans le cas où un plan passant par les lignes d'axe de l'arbre d'entrée de transmission HST (210) et de l'arbre de sortie de transmission HST (320) est dénommé plan de référence virtuel de transmission HST (FP), d'un côté du plan de référence virtuel de transmission HST (FP) dans la direction de la largeur orthogonale au plan de référence virtuel de transmission HST (FP),
le mécanisme d'engrenage planétaire (400) comporte une roue solaire (410) recevant fonctionnellement une sortie de transmission HST provenant de l'arbre de sortie de transmission HST (230) et étant positionnée sur une ligne d'axe qui est disposée d'un côté opposé de l'arbre d'entrée de boîte de vitesses (120) par rapport au plan de référence virtuel de transmission HST (FP) dans la direction de la largeur, de manière que la ligne d'axe de l'arbre d'entrée de boîte de vitesses (120) soit intercalée entre eux, une roue dentée interne (430) recevant fonctionnellement une sortie de source d'entraînement provenant de l'arbre relais de prise de force (320), et un porte-satellites (420) produisant une puissance de rotation combinée de la sortie de transmission HST et de la sortie de source d'entraînement, et
le train d'engrenages de décélération (330) est inséré entre l'arbre de transmission de prise de force (310) et une partie de l'arbre relais de prise de force (320) qui est positionnée sur un côté aval du mécanisme d'engrenage planétaire (400) dans le sens de transmission de puissance.

3. Appareil de transmission pour véhicule de travail (100A) selon la revendication 2, comprenant : un arbre de transmission de déplacement (450) ayant une ligne d'axe disposée d'un côté opposé de la ligne d'axe de l'arbre d'entrée de boîte de vitesses (120) par rapport à la ligne d'axe du mécanisme d'engrenage planétaire (400), dans la direction de la largeur, de manière que la ligne d'axe de l'arbre d'entrée de boîte de vitesses (120) soit intercalée entre eux ; un mécanisme de commutation de marche avant/arrière (460) configuré pour transmettre fonctionnellement la puissance de rotation du porte-satellites (420) à l'arbre de transmission de déplacement (450) de manière à commuter entre les marches avant et arrière, dans lequel :
le mécanisme de commutation de marche avant/arrière (460) comporte : un premier mécanisme de transmission de déplacement (465) comportant une première roue menante de déplacement (466) fonctionnellement accouplée au porte-satellites (420) et une première roue menée de déplacement (467) insérée autour de l'arbre de transmission de déplacement (450) de manière à pouvoir tourner par rapport à celui-ci et engrenant avec la première roue menante de déplacement (466), le premier mécanisme de transmission de déplacement (465) transmettant fonctionnellement, en tant que puissance de rotation dans l'un des sens avant et arrière, la puissance de rotation du porte-satellites (420), à la première roue menée de déplacement (467) ; un second mécanisme de transmission de déplacement (470) comportant une seconde roue menante de déplacement (471) fonctionnellement accouplée au porte-satellites (420) et une seconde roue menée de déplacement (472) insérée autour de l'arbre de transmission de déplacement (450) de manière à pouvoir tourner par rapport à celui-ci, le second mécanisme de transmission de déplacement (470) étant configuré pour transmettre fonctionnellement, en tant que puissance de rotation dans l'autre des sens avant et arrière, la puissance de rotation du porte-satellites (420), à la seconde roue menée de déplacement (472) ; et un mécanisme d'embrayage (480) configuré pour mettre en prise de manière sélective les première et seconde roues menées de déplacement (467, 472) avec l'arbre de transmission de déplacement (450), et
le second mécanisme de transmission de déplacement (470) comporte en outre un arbre relais de déplacement (475) inséré autour de l'arbre relais de prise de force (320) de manière à pouvoir tourner par rapport à celui-ci, une première roue intermédiaire (476) supportée par l'arbre relais de déplacement (475) de manière à ne pas pouvoir tourner par rapport à celui-ci et engrenant avec la seconde roue menante de déplacement (471), et une seconde roue intermédiaire (477) supportée par l'arbre relais de déplacement (475) de manière à ne pas pouvoir tourner par rapport à celui-ci et engrenant avec la seconde roue menée de déplacement (472) par l'intermédiaire d'une roue folle.

4. Appareil de transmission pour véhicule de travail (100A) selon la revendication 3, comprenant : un arbre de sortie de déplacement (500) disposé parallèlement à l'arbre de transmission de déplacement (450) ; et un mécanisme de transmission à plusieurs étages (490) configuré pour déplacer, sur de multiples étages, la puissance de rotation entre l'arbre de transmission de déplacement (450) et l'arbre de sortie de déplacement (500).

5. Appareil de transmission pour véhicule de travail (100A) selon la revendication 4, dans lequel l'arbre de transmission de déplacement (450) est disposé du côté opposé du plan de référence virtuel de transmission HST (FP) par rapport à l'arbre d'entrée de boîte de vitesses (120) dans la direction de la largeur, et l'arbre de sortie de déplacement (500) est disposé entre le plan de référence virtuel de transmission HST (FP) et la ligne d'axe du mécanisme d'engrenage planétaire (400) par rapport à la direction de la largeur.

6. Appareil de transmission pour véhicule de travail (100A) selon l'une quelconque des revendications 2 à 5, comprenant :
un arbre de sortie d'accélération (140) délivrant une puissance de rotation accélérée par le train d'engrenages d'accélération (130) ;
un carter d'engrenages (150) configuré pour supporter l'arbre d'entrée de boîte de vitesses (120) et l'arbre de sortie d'accélération (140) et pour accueillir le train d'engrenages d'accélération (130) ;
un boîtier de transmission HST (250) configuré pour supporter l'arbre d'entrée de transmission HST (210) et l'arbre de sortie de transmission HST (230) et pour accueillir le corps principal de pompe (220) et le corps principal de moteur (240) ; et
un carter de boîte de vitesses (600) configuré pour supporter l'arbre relais de prise de force (320) et l'arbre de transmission de prise de force (310) et pour accueillir le mécanisme d'engrenage planétaire (400) et le train d'engrenages de décélération (330), dans lequel :
l'arbre de sortie d'accélération (140) et l'arbre d'entrée de transmission HST (210) sont configurés pour être accouplés l'un à l'autre de manière à ne pas pouvoir tourner l'un par rapport à l'autre autour de l'axe, par raccordement du carter d'engrenages (150) au boîtier de transmission HST (250),
le carter de boîte de vitesses (600) est configuré pour supporter l'arbre de transmission de prise de force (310) sur une première ligne d'axe et pour supporter le mécanisme d'engrenage planétaire (400) sur une deuxième ligne d'axe, le boîtier de transmission HST (250) est configuré pour être raccordé de manière amovible au carter de boîte de vitesses (600) dans des première et deuxième positions, la première position ayant pour effet de positionner l'arbre d'entrée de transmission HST (210) sur une troisième ligne d'axe tout en ayant pour effet de positionner l'arbre de sortie de transmission HST (230) sur une quatrième ligne d'axe, la deuxième position ayant pour effet de positionner l'arbre de sortie de transmission HST (230) sur une cinquième ligne d'axe, tout en ayant pour effet de positionner l'arbre d'entrée de transmission HST (210) sur la troisième ligne d'axe, et
le carter d'engrenage (150) est raccordé de manière amovible au boîtier de transmission HST (250) dans des première et deuxième positions, dans le cas où le boîtier de transmission HST est accouplé au carter de boîte de vitesses (600) dans les première et deuxième positions, respectivement, la première position du carter d'engrenage (150) par rapport au boîtier de transmission HST (250) ayant pour effet de positionner l'arbre d'entrée de boîte de vitesses (120) sur la première ligne d'axe tout en ayant pour effet de positionner l'arbre de sortie d'accélération (140) sur la troisième ligne d'axe, la deuxième position du carter d'engrenage (150) par rapport au boîtier de transmission HST (250) ayant pour effet de positionner l'arbre d'entrée de boîte de vitesses (120) sur la première ligne d'axe, tout en ayant pour effet de positionner l'arbre de sortie d'accélération (140) sur la troisième ligne d'axe.

7. Appareil de transmission pour véhicule de travail (100A) selon la revendication 6, dans lequel le boîtier de transmission HST (250) est également raccordé de manière amovible au carter de boîte de vitesses (600) dans une troisième position ayant pour effet de positionner l'arbre d'entrée de transmission HST (210) sur la première ligne d'axe, en plus des première et deuxième positions.

8. Appareil de transmission pour véhicule de travail (100A, 100B) selon la revendication 1, comprenant : un mécanisme de transmission à plusieurs étages (490) inséré entre la transmission HST (200) et l'unité d'entraînement de déplacement (20) sur un trajet de transmission de déplacement, le mécanisme de transmission à plusieurs étages (490) déplaçant, sur de multiples étages, la puissance de rotation appliquée fonctionnellement depuis l'arbre de sortie transmission HST (230) et délivrant la puissance de rotation résultante vers l'unité d'entraînement de déplacement (20).
